(19) 

**Europäisches Patentamt**
**European Patent Office**
**Office européen des brevets**

(11) **EP 2 192 710 A1**

(12) **EUROPEAN PATENT APPLICATION**
published in accordance with Art. 153(4) EPC

(43) Date of publication:
**02.06.2010 Bulletin 2010/22**

(21) Application number: **08831363.0**

(22) Date of filing: **19.09.2008**

(51) Int Cl.:
*H04J 11/00* (2006.01)     *H04J 13/04* (2006.01)
*H04J 13/06* (2006.01)

(86) International application number:
**PCT/JP2008/066991**

(87) International publication number:
**WO 2009/038178 (26.03.2009 Gazette 2009/13)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **21.09.2007 JP 2007245649**

(71) Applicant: **Sharp Kabushiki Kaisha**
**Osaka-shi, Osaka 545-8522 (JP)**

(72) Inventors:
• **NOGAMI, Toshizo**
**Osaka-shi, Osaka 545-8522 (JP)**
• **YOSHIMOTO, Takashi**
**Osaka-shi, Osaka 545-8522 (JP)**
• **YAMADA, Ryota**
**Osaka-shi, Osaka 545-8522 (JP)**
• **SHIMEZAWA, Kazuyuki**
**Osaka-shi, Osaka 545-8522 (JP)**

(74) Representative: **Müller - Hoffmann & Partner**
**Patentanwälte**
**Innere Wiener Strasse 17**
**81667 München (DE)**

(54) **TRANSMITTING DEVICE, RECEIVING DEVICE, COMMUNICATION SYSTEM AND TRANSMITTING METHOD**

(57)     A transmission apparatus which communicates with a reception apparatus is provided. The transmission apparatus includes a transmission parameter control unit which sets a transmission parameter of at least one of the multiplex channels to be different from those of the other channels, and a transmission unit which transmits information indicating a signal detection order for the multiplex channels to the reception apparatus.

FIG. 1

100a ; WIRELESS TRANSMISSION APPARATUS

**Description**

The present invention relates to a transmission apparatus, a reception apparatus, a communication system, and a transmission method.

This application claims priority based on Japanese Patent Application No. 2007-245649 filed on September 21, 2007, the entire contents of which is incorporated hereby by reference.

BACKGROUND ART

A transmitting side of an MC-CDMA (Multi-carrier Code Division Multiple Access) or an OFCDM (Orthogonal Frequency and Code Division Multiplexing) scheme used as basic technology for a wireless interface repeatedly allocates (copies) information symbols to successive sub-carriers corresponding to a spreading factor and multiplies spreading codes over the sub-carriers (hereinafter, referred to as spreading on a frequency axis).

Since the symbols of the sub-carriers are spread on the frequency axis with separable spreading codes, code multiplexing can be performed. The receiving side performs demodulation by performing despreading with the spreading codes in which desired information symbols have been spread to extract the desired information symbols and by restoring information transmitted over each sub-carrier.

The MC-CDMA or OFCDM schemes are described in, for example, Non-Patent Document 1. It is necessary to maintain excellent orthogonality between spreading code sequences in order to accurately obtain information symbols from a code-multiplexed signal at a receiving side of the MC-CDMA or OFCDM scheme. However, in a mobile communication environment, the amplitude and phase of a signal indicating the information symbol are changed and orthogonality between codes is degraded due to frequency-selective fading.

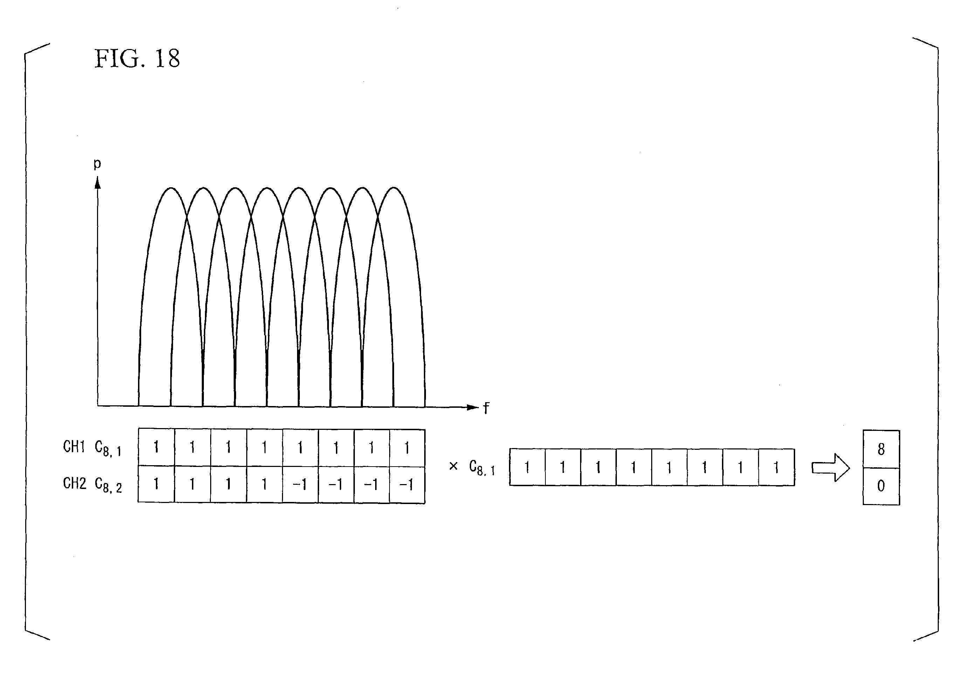

FIG. 18 illustrates an example of a despreading result when a signal transmitted from a transmission unit to a receiver does not undergo fading. In a graph of FIG. 18, a horizontal axis indicates a frequency f and a longitudinal axis indicates reception power p.

As shown in FIG. 18, a channel CH1 is multiplied by spreading codes (1, 1, 1, 1, 1, 1, 1, 1) of $C_{8.1}$ over each sub-carrier and a channel CH2 is multiplied by spreading codes (1,1,1,1,-1,-1,-1,-1) of $C_{8.2}$. A signal including the code-multiplexed channels CH1 and CH2 is received at a receiving side via a propagation channel on which the signal does not undergo fading. As shown in FIG. 18, despreading is performed on the multiplexed signal with the spreading codes (1, 1, 1, 1, 1, 1, 1, 1) of $C_{8.1}$, by which the channel CH1 is multiplied.

As a result of despreading, a component of the channel CH1 multiplied by the spreading codes (1, 1, 1, 1, 1, 1, 1, 1) of $C_{8.1}$ becomes 8, and a component of the channel CH2 multiplied by the spreading codes (1, 1, 1, 1, -1, -1, -1, -1) of $C_{8.2}$ becomes 0, such that the signal of the channel CH1 can be extracted. That is, the channel CH2 maintains orthogonality with the channel CH1.

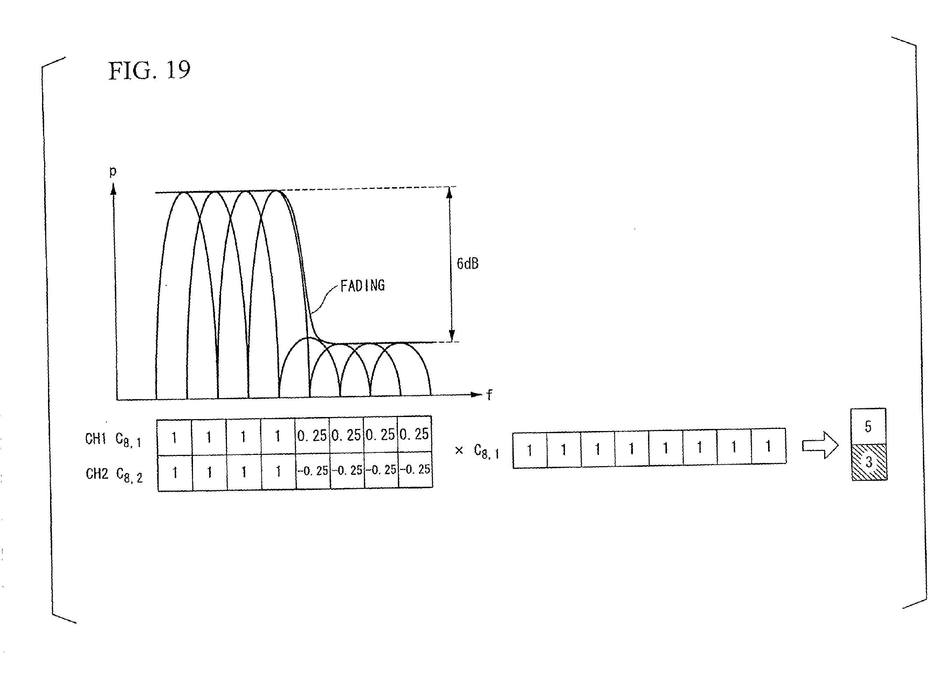

FIG. 19 illustrates an example of a despreading result when a signal transmitted from a transmission unit to a receiver undergoes fading. In a graph of FIG. 19, a horizontal axis indicates a frequency f and a longitudinal axis indicates reception power p.

As a result of fading, a channel CH1 is multiplied by spreading codes (1, 1, 1, 1, 0.25, 0.25, 0.25, 0.25) pf $C'_{8.1}$ over each sub-carrier, and a channel CH2 is multiplied by spreading codes (1, 1, 1, 1, -0.25, -0.25, -0.25, -0.25) of $C'_{8.2}$, as shown in FIG. 19. A signal including the code-multiplexed channels CH1 and CH2 is received at a receiving side via a propagation channel on which the signal undergoes fading. As shown n FIG. 19, despreading is performed on the multiplexed signal with spreading codes (1, 1, 1, 1, 1, 1, 1, 1) of $C_{8.1}$ of the channel CH1.

As a result of despreading, a component of the channel CH1 becomes 5 and a component of the channel CH2 becomes 3, such that a demodulated signal having a size of 8 (=5+3) can be obtained, but an interference component of the channel CH2 with the channel CH1 is produced, which degrades orthogonality.

As shown in FIG. 19, if despreading is performed at the receiving side in a state in which the orthogonality between the spreading code sequences is degraded, an interference component increases due to signals other than the desired information symbols. Accordingly, the information symbols cannot be accurately extracted and transmission quality is degraded.

As a scheme for solving such a problem, there is a successive interference canceller (SIC) as disclosed in Non-Patent Documents 2 and 3. The SIC disclosed in Non-Patent Documents 2 and 3 uses a process of despreading, demodulating, and decoding a received code-multiplexed signal in an order of high reception signal power or high Signal to Interference plus Noise power Ratio (SINR) of each channel signal to obtain a decision signal for information symbols, and also deducting a replica signal produced using the result of decision from the received signal.

Such a process is repeatedly performed, thereby accurately canceling signals other than the desired channel signal and suppressing property deterioration causing the degraded orthogonality between spreading code sequences. As described above, the information signal of each channel is calculated from a signal obtained by sequentially subtracting an output signal of a fast Fourier transform (FFT) in the signal detection order determined by the received signal power of each channel or the SINR, thereby suppressing the property deterioration causing the degraded orthogonality between the spreading code sequences.

Non-Patent Document 1: Maeda, Arata, Abeta, and Sawahashi, "VSF-OFCDM Using 2D Spreading and Property Thereof," The Institute of Electronics, Information and Communication Engineers, technical report RCS 2002-61, May, 2002

Non-Patent Document 2: Ishihara, Takeda, and Adachi, "DS-CDMA Frequency Domain MAI Canceller," The Institute of Electronics, Information and Communication Engineers, technical report RCS 2004-316, January., 2005

Non-Patent Document 3: Akita, Suyama, Fukawa, and Suzuki, "Interference Canceller in Downlink Using Transmission Power Control of MC-CDMA," The Institute of Electronics, Information and Communication Engineers, technical report RCS 2002-35, April., 2002

DISCLOSURE OF INVENTION

Problem to be Solved by the Invention

However, the SIC disclosed in Non-Patent Documents 2 and 3 must determine the channel signal detection order based on a reception-state estimation result, such as the received signal power, the SINR, etc., of each channel signal. Accordingly, a process in which a wireless reception apparatus compares the reception-state estimation results to determine the detection order is required and an increase of processing amount is caused.

The present invention has been achieved in view of such problems, and an object of the present invention is to provide a transmission apparatus, a reception apparatus, a communication system and a transmission method which allow the reception apparatus receiving a signal including a plurality of multiplexed channels from the transmission apparatus to detect respective code channels in a proper order, thereby reducing a processing amount in the reception apparatus.

Means for Solving the Problem

(1) In order to achieve the object, a transmission apparatus according to an aspect of the present invention communicates with a reception apparatus, the transmission apparatus including: a transmission parameter control unit which sets a transmission parameter of at least one of the multiplex channels to be different from those of the other channels; and a transmission unit which transmits information indicating a signal detection order for the multiplex channels to the reception apparatus.

In the present invention, since the transmission parameter control unit sets a transmission parameter of at least one of the multiplex channels to be different from those of the other channels, and the transmission unit transmits information indicating the signal detection order for the multiplex channels to the reception apparatus, the reception apparatus receiving a signal including a plurality of multiplexed channels from the transmission apparatus can detect respective code channels in a proper order, thereby reducing a processing amount in the reception apparatus.

(2) The transmission apparatus according to an aspect of the present invention further includes a signal detection order determination unit which determines the signal detection order for the multiplex channels using the transmission parameters of the multiplex channels, wherein the transmission unit transmits the information indicating the signal detection order determined by the signal detection order determination unit to the reception apparatus.

(3) The transmission apparatus according to an aspect of the present invention further includes a signal detection order determination unit which determines the signal detection order for the multiplex channels, wherein the transmission parameter control unit sets a transmission parameter of at least one of the multiplex channels to be different from those of the other channels using the signal detection order, and the transmission unit transmits the information indicating the signal detection order to the reception apparatus.

(4) The transmission unit of the transmission apparatus according to an aspect of the present invention transmits a data signal generated using the transmission parameters and detection order information indicating the signal detection order to the reception apparatus.

(5) In the transmission apparatus according to an aspect of the present invention, the information indicating the signal detection order is transmission parameter control information indicating the transmission parameters set in association with the signal detection order, and the transmission unit transmits a data signal generated using the transmission parameters and the transmission parameter control information to the reception apparatus.

(6) In the transmission apparatus according to an aspect of the present invention, the information indicating the signal detection order is a data signal generated using the transmission parameters set in association with the signal detection order, and the transmission unit transmits the data signal to the reception apparatus.

(7) The transmission parameter control unit of the transmission apparatus according to an aspect of the present invention sets transmission power of at least one of the multiplex channels to be different from those of the other channels, and the transmission unit transmits the signal detection order using a difference in transmission power among the channels.

(8) The transmission apparatus according to an aspect of the present invention further includes a signal detection order determination unit which determines a higher signal detection priority for a channel for which high transmission power is set, for the signal detection order.

(9) In the transmission apparatus according to an aspect of the present invention, the transmission parameter control unit sets a modulation scheme and a coding rate of at least one of the multiplex channels to be different from those of the other channels, and the transmission unit transmits the signal detection order using a difference in modulation scheme and coding rate among the channels.

(10) The transmission apparatus according to an aspect of the present invention further includes a signal detection order determination unit which determines a high signal detection priority for a channel for which a modulation scheme and a coding rate of a low transfer rate are set, for the signal detection order.

(11) The transmission parameter control unit of the transmission apparatus according to an aspect of the present invention sets a modulation scheme, a coding rate and transmission power of at least one of the multiplex channels to be different from those of the other channels, and the transmission unit transmits the signal detection order using a difference in modulation scheme, coding rate and transmission power among the channels.

(12) The transmission apparatus according to an aspect of the present invention further includes a multiplexing unit which code-multiplexes the multiplex channels.

(13) A transmission apparatus according to an aspect of the present invention further includes a multiplexing unit which spatially multiplexes the multiplex channels.

(14) A reception apparatus according to an aspect of the present invention communicates with a transmission apparatus, the reception apparatus including: a detection order obtaining unit which acquires a signal detection order from the transmission apparatus; and a signal detection unit which detects signals from a plurality of channels based on the detection order acquired by the detection order obtaining unit.

(15) In the reception apparatus according to an aspect of the present invention, the plurality of channels are code-multiplexed, and further including a separation unit which separates signals allocated to the plurality of channels.

(16) In the reception apparatus according to an aspect of the present invention, the plurality of channels are spatially multiplexed, and further including a separation unit which separates signals allocated to the plurality of channels.

(17) A communication system according to an aspect of the present invention includes a transmission apparatus and a reception apparatus, wherein the transmission apparatus includes: a transmission parameter control unit which sets a transmission parameter of at least one of the multiplex channels to be different from those of the other channels; and a transmission unit which transmits information indicating a signal detection order for the multiplex channels to the reception apparatus, and the reception apparatus includes: a detection order obtaining unit which acquires the signal detection order from the transmission apparatus; and a signal detection unit which detects signals from a plurality of channels based on the detection order acquired by the detection order obtaining unit.

(18) In the communication system according to an aspect of the present invention, the transmission apparatus includes a transmission parameter control unit which sets a transmission parameter of at least one of the multiplex channels to be different from those of the other channels, the transmission unit of the transmission apparatus transmits a data signal generated using the transmission parameters and the detection order information indicating the signal detection order for the multiplex channels to the reception apparatus, the detection order obtaining unit of the reception apparatus acquires the signal detection order from the detection order information, and the signal detection unit of the reception apparatus detects the signals from the plurality of channels based on the detection order acquired by the detection order obtaining unit.

(19) In the communication system according to an aspect of the present invention, the transmission unit of the transmission apparatus transmits a data signal generated using the transmission parameter, and transmission parameter control information indicating the transmission parameters set in association with the signal detection order as the information indicating the signal detection order for the multiplex channels to the reception apparatus, and the detection order obtaining unit of the reception apparatus acquires the signal detection order associated with the transmission parameters from the transmission parameter control information.

(20) In the communication system according to an aspect of the present invention, the transmission unit of the transmission apparatus transmits a data signal generated using the transmission parameters set in association with the signal detection order as the information indicating the signal detection order for the multiplex channels to the reception apparatus, and the detection order obtaining unit of the reception apparatus estimates the transmission parameters applied to the data signals and acquires the signal detection order from the estimated transmission parameters.

(21) A transmission method according to an aspect of the present invention uses a transmission apparatus which communicates with a reception apparatus, wherein the transmission apparatus executes: a transmission parameter controlling process of setting a transmission parameter of at least one of the multiplex channels to be different from those of the other channels; and a transmitting process of transmitting information indicating a signal detection order for the multiplex channels to the reception apparatus.

Effect of the Invention

With the transmission apparatus, the reception apparatus, the communication system and the transmission method of the present invention, the wireless reception apparatus receiving a signal including a plurality of multiplexed channels from the wireless transmission apparatus can detect respective code channels in a proper order, thereby reducing a processing amount in the wireless reception apparatus.

BRIEF DESCRIPTION OF THE DRAWINGS

FIG. 1 is a schematic block diagram illustrating a configuration of a wireless transmission apparatus 100a according to a first embodiment of the present invention.
FIG. 2 is a diagram illustrating an example of MCS information used in the first embodiment of the present invention.
FIG. 3 is a diagram illustrating an example of a detection order used in the first embodiment of the present invention.
FIG. 4 is a schematic block diagram illustrating a configuration of a wireless reception apparatus 200a according to the first embodiment of the present invention.
FIG. 5 is a schematic block diagram illustrating a configuration of a reception data detection unit 407 (FIG. 4) according to the first embodiment of the present invention.
FIG. 6 is a schematic block diagram illustrating a configuration of a successive cancelling unit 502 according to the first embodiment of the present invention.
FIG. 7 is a schematic block diagram illustrating a configuration of a code channel replica generation unit 603-m according to the first embodiment of the present invention.
FIG. 8 is a flowchart illustrating a receiving process in a wireless reception apparatus 200a according to the first embodiment of the present invention.
FIG. 9 is a schematic block diagram illustrating a configuration of a wireless transmission apparatus 100b according to a second embodiment of the present invention.
FIG. 10 is a schematic block diagram illustrating a configuration of a wireless reception apparatus 200b according to the second embodiment of the present invention.
FIG. 11 is a table which is used in the second embodiment of the present invention.
FIG. 12 is a schematic block diagram illustrating a configuration of a reception data detection unit 407 in the wireless reception apparatus 200b according to the second embodiment of the present invention.
FIG. 13 is a table which is used in a third embodiment of the present invention.
FIG. 14 is a schematic block diagram illustrating a configuration of a reception data detection unit 407 of a wireless reception apparatus according to the third embodiment of the present invention.
FIG. 15 is a schematic block diagram illustrating a configuration of a reception power obtaining unit 1203 (FIG. 14) according to the third embodiment of the present invention.
FIG. 16 is a table which is used in a fourth embodiment of the present invention.
FIG. 17 is a schematic block diagram illustrating a configuration of a reception data detection unit 407 of the wireless reception apparatus according to the fourth embodiment of the present invention.
FIG. 18 is a diagram illustrating an example of a despreading result when a signal transmitted from a transmission unit to a receiver does not undergo fading.
FIG. 19 is a diagram illustrating an example of a despreading result when a signal transmitted from a transmission unit to a receiver undergoes fading.

Reference Symbols

100a ... wireless transmission apparatus, 101-u ... code channel signal generator, 102 ... multiplexing unit, 103 ... IFFT unit, 104 ... GI insertion unit, 105 ... D/A conversion unit, 106 ... wireless transmission unit, 107 ... adaptive modulation control unit, 108 ... notification information generation unit, 109 ... pilot generation unit, 110 ... wireless reception unit, 111 ... A/D conversion unit, 112 ... demultiplexing unit, 113 ... demodulation unit, 114 ... decoding unit, 115 ... encoding unit, 116 ... modulating unit, 117 ... spreading unit, 200a ... wireless reception apparatus, 401 ... reception antenna, 402 ... wireless reception unit, 403 ... A/D conversion unit, 404 ... GI removing unit, 405 ... FFT unit, 406 ... demultiplexing unit, 407 ... reception data detection unit, 408 ... propagation channel estimation unit, 409 ... adaptive demodulation control unit, 410 ... MCS determination unit, 411 ... report information generation unit, 412 ... encoding unit, 413 ... modulating unit, 414 ... multiplexing unit, 415 ... D/A conversion unit, 416 ... wireless transmission unit

BEST MODE FOR CARRYING OUT THE INVENTION

Hereinafter, first to fourth embodiments of the present invention will be described with reference to the accompanying drawings. First, the first embodiment of the present invention will be described. The present invention also relates to a new data transmission system using a downlink from a base station device to a mobile station device in a cellular phone system.

Both of the base station device and the mobile station device have transmission and reception functions. However, since the present invention relates to a wireless communication from the base station device to the mobile station device as described above, the former is referred to as a wireless transmission apparatus and the latter is referred to as a wireless reception apparatus, for convenience of illustration. However, the present invention is not limited to the wireless communication between the base station device and the mobile station device as described above.

(First embodiment)

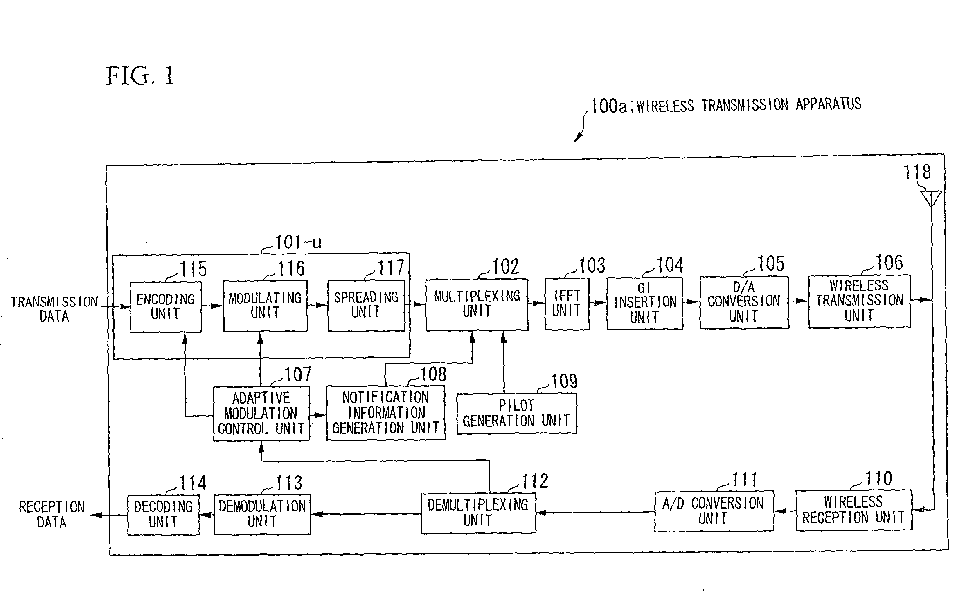

FIG. 1 is a schematic block diagram illustrating a configuration of a wireless transmission apparatus 100a according to the first embodiment of the present invention.

The wireless transmission apparatus 100a (also referred to as transmission apparatus) includes code channel signal generators 101-u, a multiplexing unit 102, an inverse fast Fourier transform (IFFT) unit 103, a guard interval (GI) insertion unit 104, a digital/analog (D/A) conversion unit 105, a wireless transmission unit 106 (also referred to as transmission unit), an adaptive modulation control unit 107 (also referred to as transmission parameter control unit), a notification information generation unit 108 (also referred to as signal detection order determination unit), a pilot generation unit 109, a wireless reception unit 110, an analog/digital (A/D) conversion unit 111, a demultiplexing unit 112, a demodulation unit 113, and a decoding unit 114.

Also, each of the code channel signal generators 101-u includes an encoding unit 115, a modulating unit 116, and a spreading unit 117.

In addition, although the u code channel signal generators are disposed, only the code channel signal generator 101-u associated with a u-th user is shown.

First, transmission data of the u-th user is input to the code channel signal generator 101-u, which generates each code channel signal. In the code channel signal generator 101-u, the encoding unit 115 performs error correction coding on the transmission data using an error correcting code, such as a convolution code or a turbo code. The error correction coded transmission data is mapped to a modulation symbol, such as quadrature phase shift keying (QPSK) or 16 quadrature amplitude modulation (16QAM) by the modulating unit 116.

A coding rate for the encoding unit 115 and a modulation scheme for the modulating unit 116 are determined based on adaptive modulation control information output from the adaptive modulation control unit 107. The adaptive modulation control information is, for example, information indicating a modulation and coding schemes (MCS) for each transmission data, for each wireless reception apparatus that is a destination of the transmission data, or for each channel. However, in embodiments described below, the adaptive modulation control information (transmission parameter control information) is information indicating an MCS for each code channel. Also, in the present embodiment, the adaptive modulation control information is not necessarily limited to the MCS for each code channel.

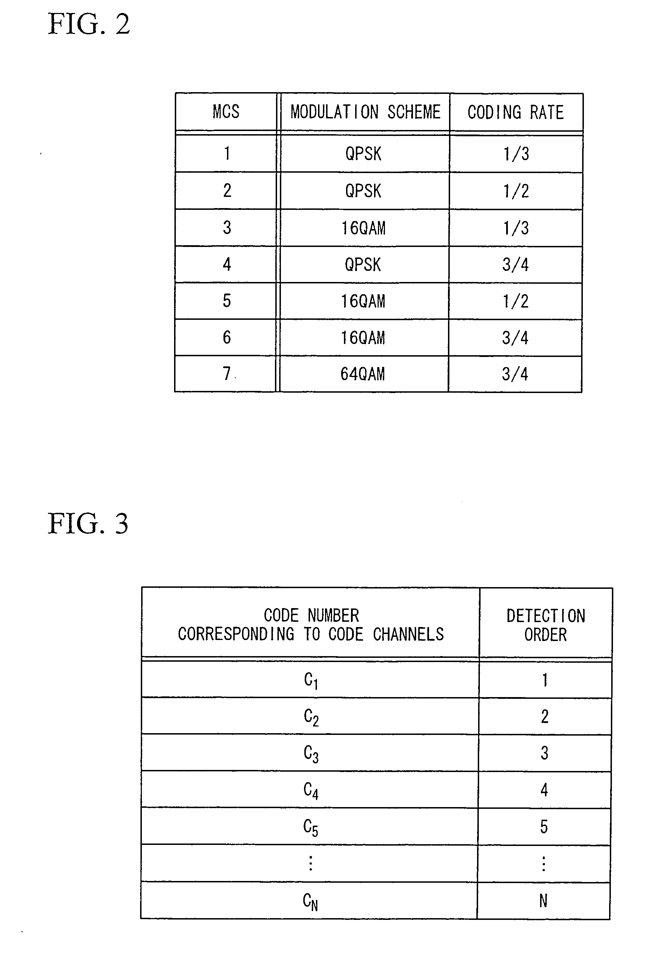

FIG. 2 is a diagram illustrating an example of MCS information used in the first embodiment of the present invention. The MCS indicates a combination between a modulation scheme and a coding rate. As the value of MCS increases, the transfer rate increases. For example, when the MCS is 1, the modulation scheme is QPSK, an information amount per symbol is 2 bits, and the coding rate is 1/3.

In FIG. 2, when the MCS is 2, the modulation scheme is QPSK, the information amount per symbol is 2 bits, and the coding rate is 1/2. When the MCS is 3, the modulation scheme is 16QAM, the information amount per symbol is 4 bits, and the coding rate is 1/3. When the MCS is 4, the modulation scheme is QPSK, the information amount per symbol is 2 bits, and the coding rate is 3/4. When the MCS is 7, the modulation scheme is 64QAM, the information amount per symbol is 6 bits, and the coding rate is 3/4. When the MCS is 8, the modulation scheme is 64QAM, the information amount per symbol is 6 bits, and the coding rate is 3/4. That is, as MCS increases from 1 to 8, the information amount per symbol according to the modulation scheme multiplied by the coding rate increases and the transfer rate increases, but the reception quality decreases.

Referring back to FIG. 1, an output of the code channel signal generator 101-u is input to the multiplexing unit 102 together with outputs of the other code channel signal generators, and multiplexed with a control signal (a signal for transmitting the reception apparatus of the adaptive modulation control information (information indicating a modulation scheme and a coding rate in a channel corresponding to each spreading code) that is an output of the notification information generation unit 108, and detection order information), and a pilot signal that is an output of the pilot signal generator 109. That is, the signal for the adaptive modulation control information and the detection order information is transmitted using a new wireless resource.

An output of the multiplexing unit 102 is frequency-time converted by the IFFT unit 103, GI-inserted by the GI insertion unit 104, D/A-converted by the D/A conversion unit 105, converted into a wireless frequency by the wireless transmission unit 106, and transmitted from the antenna 118 to the wireless reception apparatus.

The adaptive modulation control information is produced based on, for example, a signal transmitted from a wireless reception apparatus of the other party, which is a mobile station device. First, a signal received by the antenna 118 is converted into a base band signal by the wireless reception unit 110 and A/D-converted by the A/D conversion unit 111.

An output of the A/D conversion unit 111 is separated into a data symbol sequence and a report information symbol sequence by the demultiplexing unit 112. The data symbol sequence output from the demultiplexing unit 112 is demodulated by the demodulation unit 113 and error-correction-coded by the decoding unit 114, such that reception data can be obtained.

Meanwhile, the report information symbol sequence output from the demultiplexing unit 112 is input to the adaptive modulation control unit 107. The adaptive modulation control unit 107 generates, for example, information for performing adaptive modulation (adaptive modulation control information), such as the modulation scheme and the coding rate, based on the report information indicated by the report information symbol sequence, and outputs the produced adaptive modulation control information to the encoding unit 115 and the modulating unit 116. The adaptive modulation control unit 107 also outputs the adaptive modulation control information to the notification information generation unit 108, which determines a detection order and generates a control signal for transmitting the wireless reception apparatus of the adaptive modulation control information and detection order information indicating the detection order. Here, the adaptive modulation control unit 107 determines the adaptive modulation control information and the notification information generation unit 108 determines the detection order based on the adaptive modulation control information, but the present invention may not follow this procedure. For example, the adaptive modulation control unit 107 may determine the detection order and create the adaptive modulation control information based on the determined detection order. In this case, the notification information generation unit 108 does not have to determine the detection order and the adaptive modulation control unit 107 may create detection order information indicating the determined detection order. A relationship between the adaptive modulation control information and the detection order will be described below.

FIG. 3 is a diagram illustrating an example of the detection order used in the first embodiment of the present invention. In FIG. 3, code numbers $C_1$, $C_2$, $C_3$, ... , $C_N$ corresponding to code channels and detection orders 1, 2, 3, ... , N are shown to correspond to each other. When channels corresponding to N (N is a natural number equal to or greater than 2) spreading codes from code number $C_1$ to code number $C_N$ are used as the code channels, the detection is performed in an order of code numbers $C_1 \rightarrow C_2 \rightarrow C_3 \rightarrow ... \rightarrow C_N$, that is, in order from a low transfer rate channel to a high transfer rate channel. The detection order information indicates such an order.

In the wireless transmission apparatus 100a according to the present embodiment, the adaptive modulation control unit 107 sets a transmission parameter (in the present embodiment, the modulation scheme and the coding rate) of at least one of the multiplex channels to be different from those of the other channels, and the wireless transmission unit 106 transmits the information indicating the signal detection order for the multiplex channels (see FIG. 3) to the wireless reception apparatus 200a. However, the present invention is not limited thereto.

For example, in the present embodiment, the notification information generation unit 108 may determine the signal detection order for the multiplex channels using the transmission parameters of the multiplex channels, and the wireless transmission unit 106 may transmit information indicating the signal detection order determined by the notification information generation unit 108 to the wireless reception apparatus 200a.

Also, in the present embodiment, the notification information generation unit 108 may determine the signal detection order for multiplex channels, the adaptive modulation control unit 107 may set the transmission parameter of at least one of the multiplex channels to be different from those of the other channels using the signal detection order, and the wireless transmission unit 106 may transmit the information indicating the signal detection order to the wireless reception apparatus 200a.

Also, in the present embodiment, the wireless transmission unit 106 may transmit a data signal generated using the transmission parameters and the detection order information indicating the signal detection order to the wireless reception apparatus 200a.

Also, in the present embodiment, the information indicating the signal detection order may be adaptive modulation control information indicating the transmission parameters set in association with the signal detection order (transmission parameter control information), and the wireless transmission unit 106 may transmit a data signal generated using the transmission parameters and the adaptive modulation control information to the wireless reception apparatus 200a.

Also, in the present embodiment, the information indicating the signal detection order may be a data signal generated using the transmission parameters set in association with the signal detection order, and the wireless transmission unit 106 may transmit the data signal to the wireless reception apparatus 200a.

Also, in the present embodiment, the adaptive modulation control unit 107 may set transmission power of at least one of the multiplex channels to be different from those of the other channels, and the wireless transmission unit 106 may transmit the signal detection order using a difference in transmission power among the channels. For example, the adaptive modulation control unit 107 may determine a high signal detection priority for a channel for which high transmission power is set, for the signal detection order.

Also, in the present embodiment, the adaptive modulation control unit 107 may set the modulation scheme and the coding rate of at least one of the multiplex channels to be different from those of the other channels, and the wireless transmission unit 106 may transmit the signal detection order to the wireless reception apparatus 200a using a difference in modulation scheme and coding rate among the channels. For example, the adaptive modulation control unit 107 may determine a high signal detection priority for a channel for which a modulation scheme and a coding rate of a low transfer rate are set, for the signal detection order.

Also, in the present embodiment, the adaptive modulation control unit 107 may set the modulation scheme, the coding rate, and the transmission power of at least one of the multiplex channels to be different from those of the other channels, and the wireless transmission unit 106 may transmit the signal detection order to the wireless reception apparatus 200a using a difference in modulation scheme, coding rate, and transmission power among the channels.

Also, in the present embodiment, the multiplexing unit 102 may code-multiplex the multiplex channels or may spatially multiplex the multiplex channels.

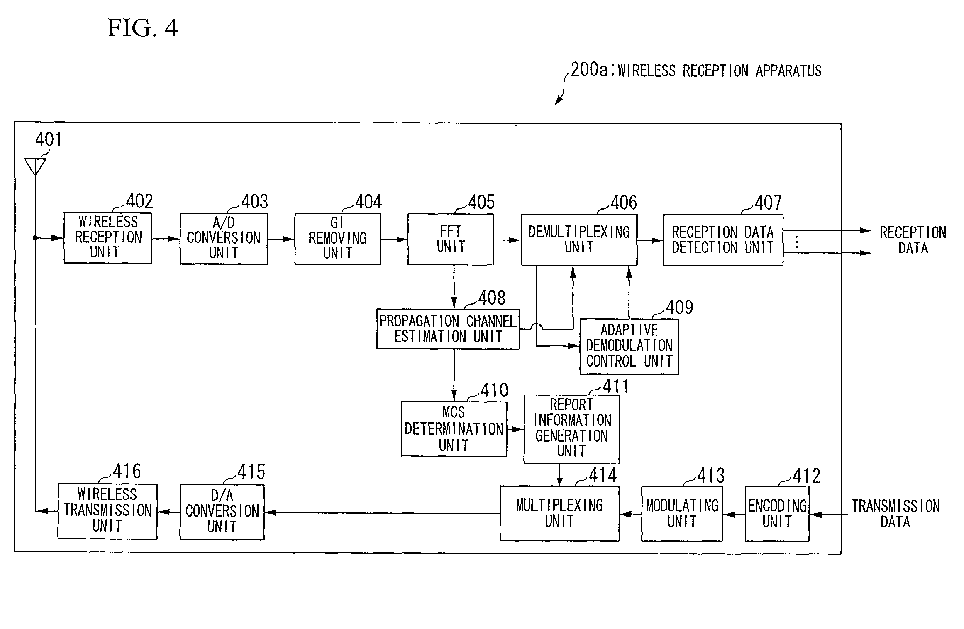

FIG. 4 is a schematic block diagram illustrating a configuration of the wireless reception apparatus 200a according to the first embodiment of the present invention. The wireless reception apparatus 200a (also referred to as reception apparatus) is, for example, a destination terminal that is a mobile station device of a u-th user. The wireless reception apparatus 200a includes a reception antenna 401, a wireless reception unit 402 (also referred to as detection order obtaining unit), an A/D conversion unit 403, a GI removing unit 404, a fast Fourier transform (FFT) unit 405, a demultiplexing unit 406 (also referred to as separation unit), a reception data detection unit 407 (also referred to as signal detection unit), a propagation channel estimation unit 408, an adaptive demodulation control unit 409, an MCS determination unit 410, a report information generation unit 411, an encoding unit 412, a modulating unit 413, a multiplexing unit 414, a D/A conversion unit 415, and a wireless transmission unit 416.

The wireless reception apparatus 200a receives a code-multiplexed signal transmitted from the wireless transmission apparatus using the antenna 401. The received signal is converted into a base band signal by the wireless reception unit 402, A/D-converted by the A/D conversion unit 403, GI-removed by the GI removing unit 404, and time-frequency converted by the FFT unit 405.

An output of the FFT unit 405 is input to the demultiplexing unit 406, which separates the pilot signal and the control signal multiplexed at a side of the wireless transmission apparatus 100a. The pilot signal is input to the propagation channel estimation unit 408, and the control signal is input to the adaptive demodulation control unit 409. The propagation channel estimation unit 408 estimates a propagation channel based on the pilot signal to obtain a propagation channel estimation value for, for example, a sub-carrier. Also, the adaptive demodulation control unit 409 produces adaptive demodulation control information (information indicating the modulation scheme and the coding rate in a channel corresponding to each spreading code) and detection order information based on the control signal. The propagation channel estimation value is input to the reception data detection unit 407 and the MCS determination unit 410, and the adaptive demodulation control information and the detection order information are input to the reception data detection unit 407.

The MCS determination unit 410 determines MCS based on the input propagation channel estimation value, and outputs information indicating MCS to the report information generation unit 411. The report information generation unit 411 generates a report information symbol sequence for reporting the information indicating the MCS to the wireless transmission apparatus 100a, and outputs the report information symbol sequence to the multiplexing unit 414. The multiplexing unit 414 multiplexes the report information symbol sequence with the transmission data that is error-correction-coded and modulated by the encoding unit 412 and the modulating unit 413. A signal output from the multiplexing unit 414 is D/A-converted by the D/A conversion unit 415, converted from the base band signal to the wireless frequency by the wireless transmission unit 416, and transmitted from the antenna 401 to the wireless transmission apparatus 100a. The reception data detection unit 407 detects the data transmitted from the wireless transmission apparatus 100a.

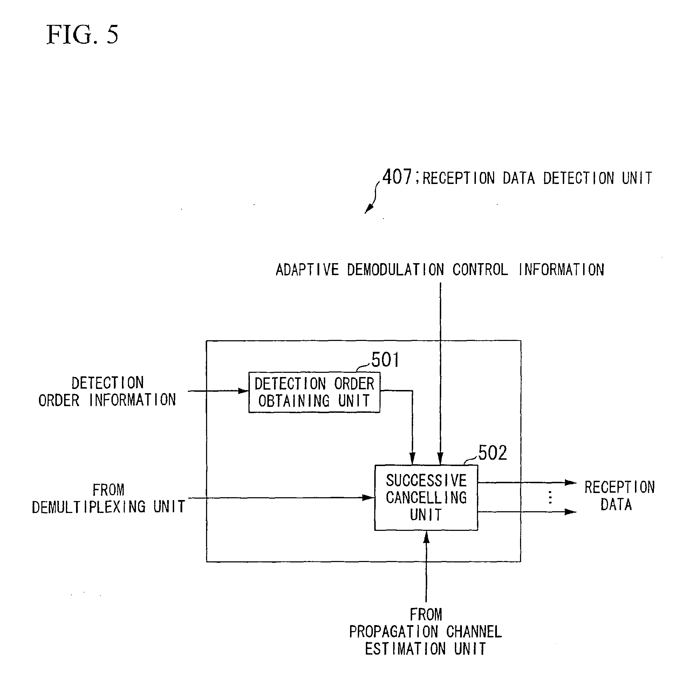

FIG. 5 is a schematic block diagram illustrating a configuration of the reception data detection unit 407 (FIG. 4) according to the first embodiment of the present invention. The reception data detection unit 407 includes a detection order obtaining unit 501 and a successive cancelling unit 502.

The wireless reception apparatus 200a receives the multiplexed signal that has been adaptively modulated by each wireless transmission apparatus 100a. The detection order obtaining unit 501 acquires a code-channel detection order from the detection order information. For example, the detection order indicating that a channel with a low transfer rate has the highest detection priority and a channel with a high transfer rate has a low detection priority is received from the wireless transmission apparatus 100a.

In general, when a signal is detected using the successive cancelling unit, an excellent detection result can be obtained by detecting signals in an order of high reliability. Also, a channel with a low transfer rate provides high reliability of signal detection.

In this case, the reliability depends on the transmission parameters set by the wireless transmission apparatus 100a. Accordingly, the wireless reception apparatus 200a detects a signal based on the detection order received from the wireless transmission apparatus 100a, thereby improving reception quality. That is, a throughput can be improved due to a high percentage of correct data reception.

Although the detection order received from the wireless transmission apparatus 100a is from a high-reliability code channel to a low-reliability code channel, some change may be made to the detection order. For example, an order indicating that the code channels of code numbers C1 and C2 are to be first detected, the code channels of the code numbers C3 and C4 are to be subsequently detected, and other code channels are to be finally detected may be received. In this case, the reception apparatus may detect code channels in an order of code numbers $C_1 \rightarrow C_2 \rightarrow C_3 \rightarrow C_4 \rightarrow ...$ or may detect code channels in an order of code numbers $C_2 \rightarrow C_1 \rightarrow C_4 \rightarrow C_3 \rightarrow ...$ .

Also, a code channel having high reception power or SINR may have a higher priority. Either case provides a higher reception quality than random detection. The successive cancelling unit 502 receives a received signal including a plurality of multiplexed pieces of data, the signal detection order notification signal that is an output of the detection order obtaining unit 501, the adaptive demodulation control information that is an output of the adaptive demodulation control unit 409, and the propagation channel estimation value that is an output of the propagation channel estimation unit 408, and detects data transmitted from the wireless transmission apparatus 100a.

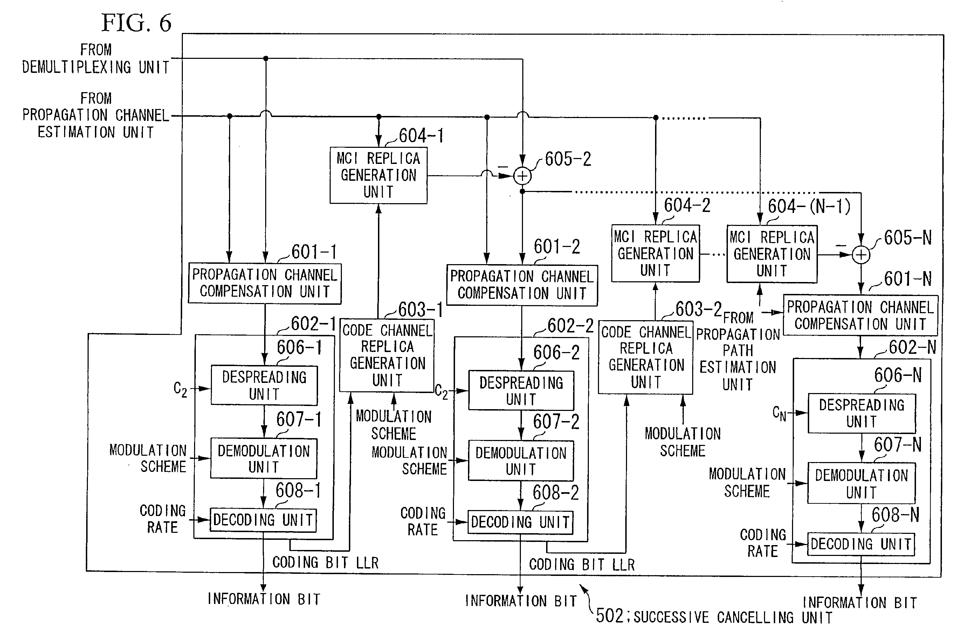

FIG. 6 is a schematic block diagram illustrating a configuration of the successive cancelling unit 502 according to the first embodiment of the present invention. The successive cancelling unit 502 has propagation channel compensation units 601-1, 601-2, ..., 601-N, code channel signal detection units 602-1, 602-2, ..., 602-N, code channel replica generation units 603-1, ..., 603-(N-1), MCI replica generation units 604-1, 604-2, ..., 604-(N-1), and subtraction units 605-2, ..., 605-N. The code channel replica generation unit 603-(N-1) is not shown.

Also, the code channel signal detection units 602-1, 602-2, ..., 602-N include despreading units 606-1, 606-2, ..., 606-N, demodulation units 607-1, 607-2, ..., 607-N, and decoding units 608-1, 608-2, ..., 608-N.

The successive cancelling unit 502 performs data detection and interference cancellation on the code channel signal in the order set by the signal cancellation order notification signal. Hereinafter, the signal cancellation order will be described as being set as an order from code numbers $C_1$ to $C_N$, as shown in FIG. 3.

First, the propagation channel compensation unit 601-1 performs propagation channel compensation on the signal input from the demultiplexing unit 406 (FIG. 4), using a weight coefficient using a known zero-forcing (ZF) or minimum mean square error (MMSE) criterion based on the propagation channel estimation value estimated by the propagation channel estimation unit 408 (FIG. 4).

Thereafter, the code channel signal detection unit 602-1 detects data for $C_1$. That is, the despreading unit 606-1 despreads the propagation-path-compensated signal using the spreading code of code number $C_1$, and the demodulation unit 607-1 performs demodulation according to a modulation scheme included in the adaptive demodulation control information and outputs a coding bit log likelihood ratio (LLR).

The decoding unit 608-1 performs error correction decoding on the coding bit LLR according to the coding rate included in the adaptive demodulation control information, outputs an information bit for $C_1$ to the outside of the successive cancelling unit 502, and outputs the coding bit LLR to the code channel replica generation unit 603-1.

The coding bit LLR output by the decoding unit 608-1 is input to the code channel replica generation unit 603-1, which generates a replica of the output that has been code-spread with a spreading code of code number $C_1$ of the code channel signal generator 101-u described with reference to FIG. 1.

The MCI replica generation unit 604-1 multiplies an output of the code channel replica generation unit 603-1 by the propagation channel estimation value input from the propagation channel estimation unit 408 (FIG. 4) to generate a MCI replica for code number $C_1$. The subtraction unit 605-2 subtracts the MCI replica for code number $C_1$ from the signal input from the demultiplexing unit 406 (FIG. 4) to perform interference cancellation.

Data for code number $C_2$ is detected using the signal obtained by subtracting the MCI replica for code number $C_1$.

Code number $C_2$ is subjected to the same process as code number $C_1$. However, a spreading code used by the despreading unit 606-2, a modulation scheme used by the demodulation unit 607-2, and a coding rate used by the decoding unit 608-2 are those corresponding to code number $C_2$.

The code channel signal detection unit 602-2 outputs an information bit for $C_2$ to the outside of the successive cancelling unit 502 and outputs a coding bit LLR to the code channel replica generation unit 603-2.

The code channel replica generation unit 603-2 generates a code channel replica for code number $C_2$ from the coding bit LLR, similar to code number $C_1$, and the MCI replica generation unit 604-2 generates an MCI replica for code number $C_2$. The subtraction unit 605-3 (not shown) subtracts the MCI replica for code number $C_2$ from the signal obtained by subtracting the MCI replica for code number $C_1$.

Data for code number $C_3$ is detected using the signal obtained by subtracting the MCI replica for code number $C_2$. The data detection, the MCI replica generation, and the MCI cancellation are performed until the information bits for all code channels $C_1$ to $C_N$ are detected.

That is, ultimately, the subtraction unit 605-N subtracts a signal obtained by sequentially subtracting the MCI replicas corresponding to code numbers $C_1$ to $C_{n-l}$, from the signal input from the demultiplexing unit 406. An output of the subtraction unit 605-N is input to the propagation channel compensation unit 601-N, which multiplies the output by the propagation channel estimation value from the propagation channel estimation unit, and the despreading unit 602-N outputs data for code number $C_N$ as an information bit.

However, a spreading code used by the despreading unit 606-N, a modulation scheme used by the demodulation unit 607-N, and a coding rate used by the decoding unit 608-N are those corresponding to code number $C_N$.

Next, a process in the demodulation unit 607-1 (FIG. 6) will be described. Here, a case in which QPSK modulation is used will be described. It is assumed that a QPSK symbol transmitted from the wireless transmission apparatus 100a is X and a symbol obtained through despreading at a side of the wireless reception apparatus 200a is Xc. If bits constituting X are $b_0$, $b_1$ ($b_0$, $b_1 = \pm 1$), X may be represented by the following equation (1):

$$X = \frac{1}{\sqrt{2}}\left(b_0 + jb_1\right) \qquad \cdot\cdot\cdot \quad (1)$$

Here, j denotes an imaginary unit. $\lambda(b_0)$, the LLR of bit $b_0$, is obtained from the estimation value Xc of X at a side of the wireless reception apparatus 200b using the following equation (2):

$$\lambda(b_0) = \frac{2\mathrm{Re}(X_c)}{\sqrt{2}(1-\mu)} \qquad \cdot\cdot\cdot \quad (2)$$

Here, Re() denotes a real part of a complex number. $\mu$ denotes an equivalent amplitude after the propagation channel compensation. If a propagation channel estimation value in the k-th sub-carrier is H(k) and a propagation channel compensation weight under an MMSE criterion is W(k), $\mu$ is W(k)H(k).

Also, $\lambda(b_1)$ is obtained by substituting a real part and an imaginary part of $\lambda(b_0)$ in equation (2).

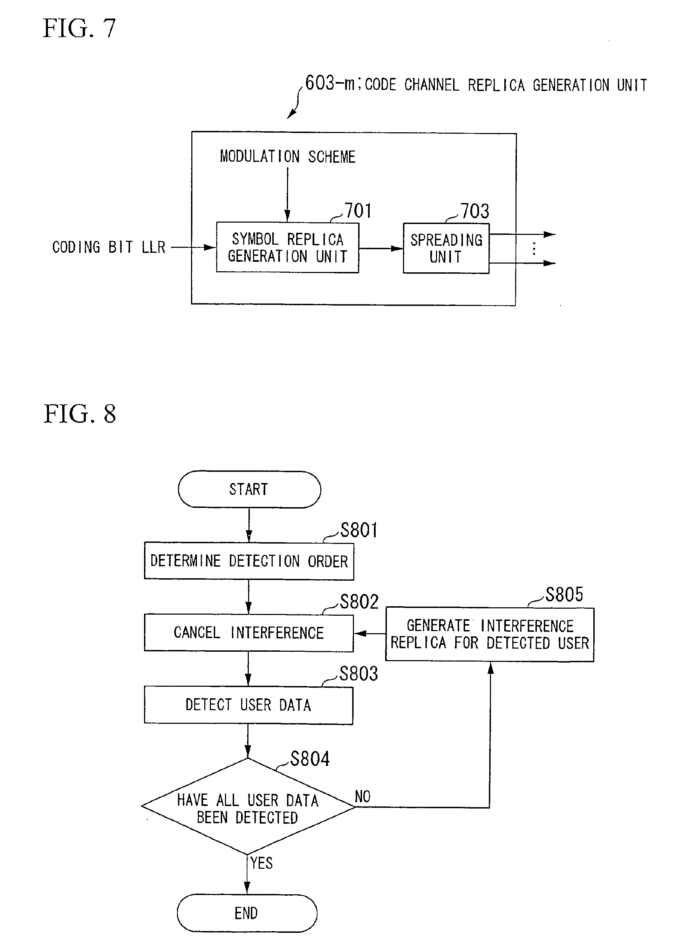

FIG. 7 is a schematic block diagram illustrating a configuration of a code channel replica generation unit 603-m according to the first embodiment of the present invention. Here, m=1 to (N-1).

A code channel replica generation unit 603-m includes a symbol replica generation unit 701 and a spreading unit 703. The symbol replica generation unit 701 generates a replica of a modulation symbol, based on the received modulation scheme, from the input coding bit LLR. Next, the replica of the modulation symbol is spread with a spreading code corresponding to $C_m$ and output by the spreading unit 703.

Next, a process in the symbol replica generation unit 701 (FIG. 7) according to the first embodiment of the present invention will be described. Here, a case in which QPSK modulation is used will be described. When the LLR of a bit constituting a QPSK modulation symbol is $\lambda(b_0)$, $\lambda(b_1)$, a replica of the modulation symbol of QPSK can be represented using the following equation (3):

$$\frac{1}{\sqrt{2}}\tanh(\lambda(b_0)/2) + \frac{j}{\sqrt{2}}\tanh(\lambda(b_1)/2) \qquad \cdot\cdot\cdot \quad (3)$$

In the wireless reception apparatus 200a according to the present embodiment, the wireless reception unit 402 acquires the signal detection order from the wireless transmission apparatus 100a, and the reception data detection unit 407 detects signals from a plurality of channels based on the detection order acquired by the wireless reception unit 402. The demultiplexing unit 406 separates signals allocated to the plurality of code-multiplexed or spatially multiplexed channels.

FIG. 8 is a flowchart illustrating a receiving process in the wireless reception apparatus 200a according to the first embodiment of the present invention. First, a signal detection order is acquired from the detection order information (step S801). Interference cancellation and data detection for each user are performed sequentially in the signal detection order determined in step S801 in the subsequent steps.

First, the process is performed from a user having the highest signal detection priority (step S802). In step S802, interference cancellation is performed. However, since an interference replica cannot be produced for the user having the highest signal detection priority, the interference cancellation is performed with an interference replica value being 0. The interference-canceled signal is propagation-path-compensated, despreaded, demodulated, and decoded for data detection (step S803).

A determination is made as to whether all user data has been detected (step S804), and when all the user data has been detected, the process of the flowchart in FIG. 8 is terminated. When all the user data has not been detected, an interference replica is generated from an LLR obtained through the decoding process in the data detection performed in step S804 (step S805). The interference cancellation is performed using the interference replica in step S802 to detect data of a user having a next detection priority.

As described above, the detection order notification is performed from the wireless transmission apparatus 100a to the wireless reception apparatus 200a, and data detection and cancellation are sequentially performed in the order received from the wireless transmission apparatus 100a, thereby improving reception quality for the users. Thus, the throughput can be improved.

(Second embodiment)

Next, a second embodiment of the present invention will be described. In the first embodiment, when the detection order notification is made from the wireless transmission apparatus to the wireless reception apparatus, the case where a new communication resource for transmitting the detection order information is used has been described. In the second embodiment, information associating the MCS information with the detection order is shared between the wireless transmission apparatus and the wireless reception apparatus in advance, such that the detection order information associated with the MCS information can be received without using a new communication resource.

In general, when a signal is detected using a successive cancelling unit, an excellent detection result can be obtained by detecting signals in an order of high reliability. In this case, the reliability depends on the MCS set at the wireless transmission apparatus. That is, a low transfer rate tends to lead to high-reliability decoded data and a high transfer rate tends to lead to low-reliability of decoded data. Accordingly, the wireless reception apparatus detects signals in an order of a low transfer rate, thereby improving the reception quality.

Although the case where the transfer rate is used is described herein, the transfer rate is generally determined by the modulation and coding schemes (including a rate matching scheme) and a low transfer rate does not necessarily lead to high reliability of decoded data according to a combination of the modulation and coding schemes. However, even in this case, the order of reliability of the decoded data is beneficial.

In the wireless transmission apparatus 100a of the communication system according to the present embodiment, the adaptive modulation control unit 107 sets a transmission parameter of at least one of the multiplex channels to be different from those of the other channels, and the wireless transmission unit 106 transmits the information indicating the signal detection order for the multiplex channels to the wireless reception apparatus 200a. Also, in the wireless reception apparatus 200a of the communication system according to the present embodiment, the wireless reception unit 402 acquires the signal detection order from the wireless transmission apparatus 100a, and the reception data detection unit 407 detects signals from a plurality of channels based on the detection order acquired by the wireless reception unit 402. Also, the communication system according to the present embodiment is not limited to such a configuration.

For example, in the present embodiment, the adaptive modulation control unit 107 of the wireless transmission apparatus 100a may set the transmission parameter of at least one of the multiplex channels to be different from those of the other channels, the wireless transmission unit 106 of the wireless transmission apparatus 100a may transmit a data signal generated using the transmission parameters and the detection order information indicating the signal detection order for the multiplex channels to the wireless reception apparatus 200a, the wireless reception unit 402 of the wireless reception apparatus 200a may acquire the signal detection order from the detection order information, and the reception data detection unit 407 of the wireless reception apparatus 200a may detect the signals from the plurality of channels based on the detection order acquired by the wireless reception unit 402.

Also, in the present embodiment, the wireless transmission unit 106 of the wireless transmission apparatus 100a may transmit a data signal generated using the transmission parameter, and the adaptive modulation control information indicating the transmission parameters set in association with the signal detection order (transmission parameter control information) as the information indicating the signal detection order for the multiplex channels to the wireless reception apparatus 200a, and the wireless reception unit 402 of the wireless reception apparatus 200a may acquire the signal detection order associated with the transmission parameters from the adaptive modulation control information.

Also, in the present embodiment, the wireless transmission unit 106 of the wireless transmission apparatus 100a may transmit a data signal generated using the transmission parameters set in association with the signal detection order as the information indicating the signal detection order for the multiplex channels to the wireless reception apparatus 200a, and the wireless reception unit 402 of the wireless reception apparatus 200a may estimate the transmission parameters applied to the data signals and acquire the signal detection order from the estimated transmission parameters.

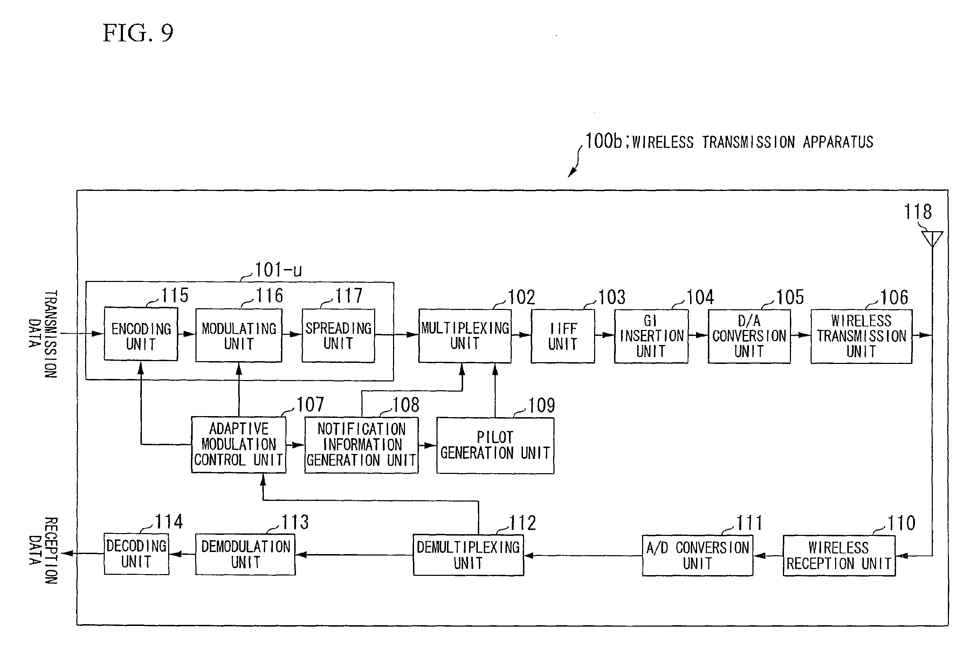

FIG. 9 is a schematic block diagram illustrating a configuration of a wireless transmission apparatus 100b according to a second embodiment of the present invention. Since the wireless transmission apparatus 100b has substantially the same configuration as the wireless transmission apparatus (FIG. 1) in the first embodiment, a detailed description thereof will be omitted.

However, an adaptive modulation control unit 107 and a notification information generation unit 108 of the wireless transmission apparatus 100b differ from those in the first embodiment.

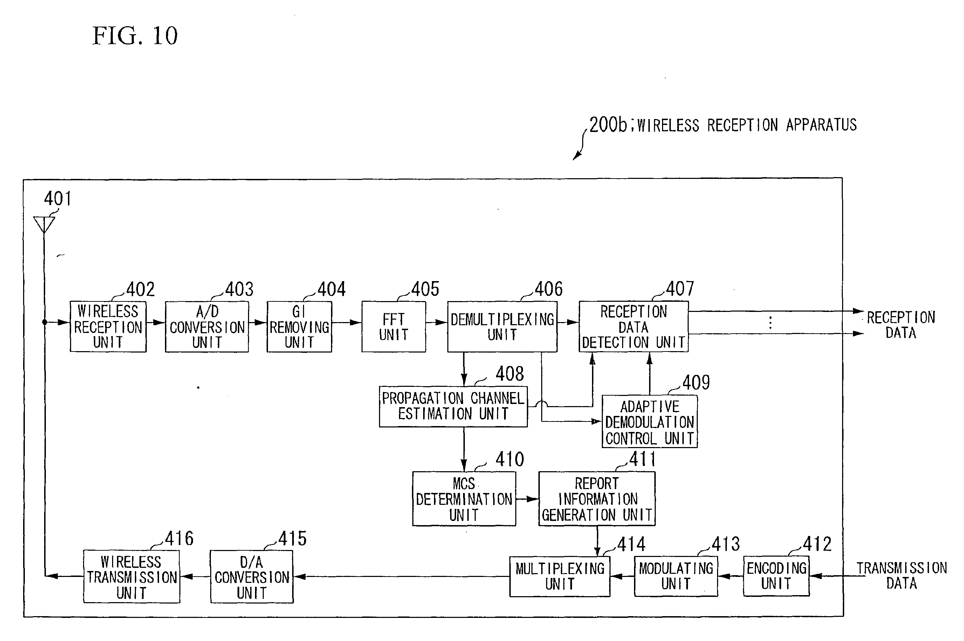

FIG. 10 is a schematic block diagram illustrating a configuration of a wireless reception apparatus 200b according to a second embodiment of the present invention. Since the wireless reception apparatus 200b has substantially the same configuration as the wireless reception apparatus (FIG. 4) in the first embodiment, a detailed description thereof will be omitted.

However, an adaptive demodulation control unit 409 and a reception data detection unit 407 in the wireless reception apparatus 200b differ from those in the first embodiment.

The adaptive modulation control unit 107 produces, for example, information for performing adaptive modulation (adaptive modulation control information), such as a modulation scheme or a coding rate, based on report information indicated by a report information symbol sequence.

In this case, at least two types of MCSs are selected in a plurality of multiplex code channels. The produced adaptive modulation control information is output to an encoding unit 115 and a modulating unit 116. The adaptive modulation control information is also output to a notification information generation unit 108.

The notification information generation unit 108 generates a control signal for transmitting the wireless reception apparatus of the adaptive modulation control information output from the adaptive modulation control unit 107, and outputs the control signal to a multiplexing unit 102.

The adaptive demodulation control unit 409 produces the adaptive demodulation control information (information indicating a modulation scheme and a coding rate in a channel corresponding to each spreading code) based on the control signal, and outputs the adaptive demodulation control information to the reception data detection unit 407.

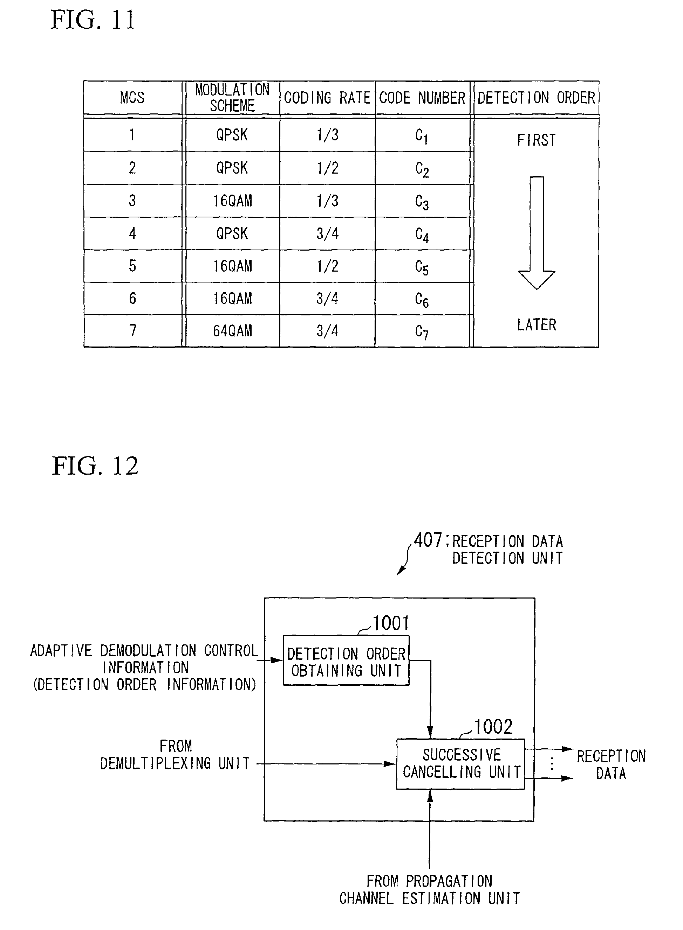

FIG. 11 is a table which is used in the second embodiment of the present invention. MCS (a modulation scheme and a coding rate), a code number, and a detection order are recorded to correspond to one another in the table. The table in FIG. 11 is shared between the wireless transmission apparatus 100b and the wireless reception apparatus 200b in advance. For example, channels corresponding to seven spreading codes of code numbers $C_1$ to $C_7$ are used, and MCS levels corresponding to transmission data allocated to the respective channels are 1 to 7. Here, the MCS levels are the same as those shown in FIG. 2. In this case, only if the wireless transmission apparatus 100b transmits the wireless reception apparatus 200b of the MCS levels corresponding to the code numbers $C_1$ to $C_7$, can the wireless reception apparatus 200b detect the data in an order of code numbers $C_1 \rightarrow C_2 \rightarrow C_3 \rightarrow C_4 \rightarrow C_5 \rightarrow C_6 \rightarrow C_7$ from the table shown in FIG. 11 and the MCS levels corresponding to the code numbers $C_1$ to $C_7$.

FIG. 12 is a schematic block diagram illustrating a configuration of the reception data detection unit 407 in the wireless reception apparatus 200b according to the second embodiment of the present invention. The reception data detection unit 407 includes a detection order obtaining unit 1001, and a successive cancelling unit 1002. The wireless reception apparatus 200b receives a multiplexed signal that has been adaptively modulated by the wireless transmission apparatus 200a.

The detection order obtaining unit 1001 stores the MCS-detection order correspondence information described in FIG. 11, and acquires the received code-channel detection order from the MCS-detection order correspondence information and the adaptive demodulation control information (information indicating a modulation scheme and a coding rate in a channel corresponding to each spreading code). In order to acquire the detection order, a method as in the example using FIG. 11 as described above can be used.

However, the detection order obtained from the adaptive demodulation control information and the MCS-detection order correspondence information may not be determined uniquely. For example, when the MCS level is 1 in code channels of code numbers C1 and C2, the MCS level is 2 in code channels of C3 and C4, and the MCS level is 3 in other code channels, the wireless reception apparatus 200b may detect data in an order of $C1 \rightarrow C2 \rightarrow C3 \rightarrow C4 \rightarrow ...$ or $C2 \rightarrow C1 \rightarrow C4 \rightarrow C3 \rightarrow ...$ .

After acquiring the detection order, the detection order obtaining unit 1001 outputs the signal detection order notification signal indicating the detection order and the adaptive demodulation control information to the successive cancelling unit 1002. The successive cancelling unit 1002 receives a received signal including a plurality of multiplexed pieces of data, the signal detection order notification signal and the adaptive demodulation control information that are outputs of the detection order obtaining unit 1001, and the propagation channel estimation value that is an output of the propagation channel estimation unit 408, and detects the data transmitted from the wireless transmission apparatus 100b. Since the successive cancelling unit 1002 can be realized in the same configuration as the successive cancelling unit 502, a description thereof will be omitted.

As described above, the detection order is received in association with the information for transmitting MCS from the wireless transmission apparatus 100b to the wireless reception apparatus 200b, and the wireless reception apparatus 200b sequentially performs data detection and cancellation in the order received from the wireless transmission apparatus 100b, thereby improving reception quality for users. Thus, the throughput can be improved.

(Third embodiment)

In the second embodiment, the information associating the MCS information with the detection order (see FIG. 11) is shared between the wireless transmission apparatus and the wireless reception apparatus in advance, such that the detection order information can be received in association with the MCS information without using a new communication resource.

In the third embodiment, the information associating the transmission power and the detection order is shared between the wireless transmission apparatus and the wireless reception apparatus in advance, such that the detection order information can be received in association with the transmission power without using a new communication resource.

In general, when a signal is detected using the successive cancelling unit, an excellent detection result can be obtained by detecting signals in an order of high reliability. In this case, the reliability depends on the transmission power set at the wireless transmission apparatus. That is, a high transmission power tends to lead to high-reliability of the decoded data and a low transmission power tends to lead to low-reliability of the decoded data.

Accordingly, the wireless reception apparatus detects a signal in an order of a high transmission power (in the case of the wireless reception apparatus, a high reception power), thereby improving reception quality.

Since the wireless transmission apparatus and the wireless reception apparatus of the third embodiment are substantially the same as the wireless transmission apparatus (FIG. 1) and the wireless reception apparatus (FIG. 4) in the first embodiment, respectively, a description thereof will be omitted.

However, an adaptive modulation control unit 107, a notification information generation unit 108 and a modulating unit 116 in the wireless transmission apparatus (FIG. 1) and an adaptive demodulation control unit 409 and a reception data detection unit 407 in the wireless reception apparatus (FIG. 4) differ from those in the first embodiment.

The adaptive modulation control unit 107 produces, for example, information for performing adaptive modulation (adaptive modulation control information), such as a modulation scheme or a coding rate, and information for performing transmission power control (transmission power control information and amplitude control information) based on the report information indicated by the report information symbol sequence. In this case, in a plurality of multiplex code channels, at least two types of transmission powers are set. The produced adaptive modulation control information is output to an encoding unit 115, a modulating unit 116, and a notification information generation unit 108 and the transmission power control information is output to a modulating unit 116.

The notification information generation unit 108 generates a control signal for transmitting the wireless reception apparatus of the adaptive modulation control information output from the adaptive modulation control unit 107, and outputs the control signal to the multiplexing unit 102.

The modulating unit 116 maps a signal output from the encoding unit 115 to a modulation symbol, such as QPSK or 16QAM, and changes and outputs an amplitude of the modulation symbol based on the transmission power control information output from the adaptive modulation control unit 107. In this case, when the transmission power control information indicates that transmission power in a certain code channel is to be increased, the modulating unit 116 increases the amplitude of the modulation symbol, and when the transmission power control information indicates that the transmission power is to be decreased, the modulating unit 116 decreases the amplitude of the modulation symbol.

The adaptive demodulation control unit 409 produces adaptive demodulation control information (information indicating a modulation scheme and a coding rate in a channel corresponding to each spreading code) based on the control signal, and outputs the adaptive demodulation control information to the reception data detection unit 407.

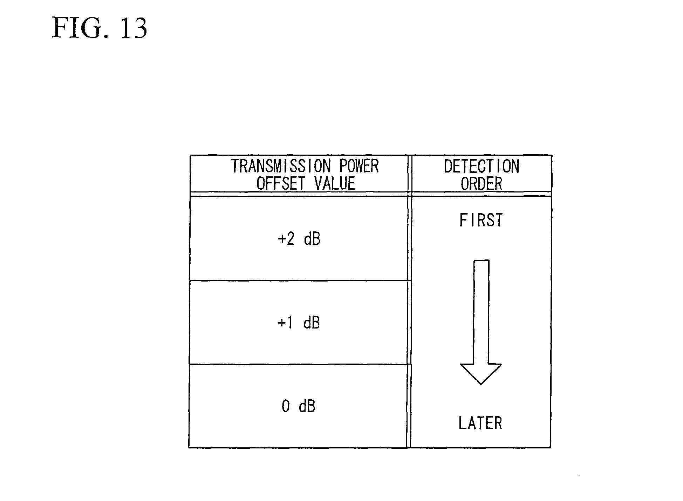

FIG. 13 is a table which is used in the third embodiment of the present invention. A transmission power offset and a detection order are recorded to correspond to each other in the table. The table of FIG. 13 is shared between the wireless transmission apparatus and the wireless reception apparatus in advance. For example, it is assumed that channels corresponding to three spreading codes of $C_1$, $C_2$, and $C_3$ are used, and transmission power levels (reception power measurement values and transmission power offset values) corresponding to transmission data allocated to the respective channels are +2, +1, and 0. In this case, only if the wireless transmission apparatus transmits the wireless reception apparatus of transmission power offset values corresponding to $C_1$, $C_2$, and $C_3$ (or simply, the wireless reception apparatus measures the reception power), can the wireless reception apparatus detect data in an order of $C_1 \rightarrow C_2 \rightarrow C_3$ from the table shown in FIG. 13 and the transmission power offset values corresponding to $C_1$, $C_2$, and $C_3$.

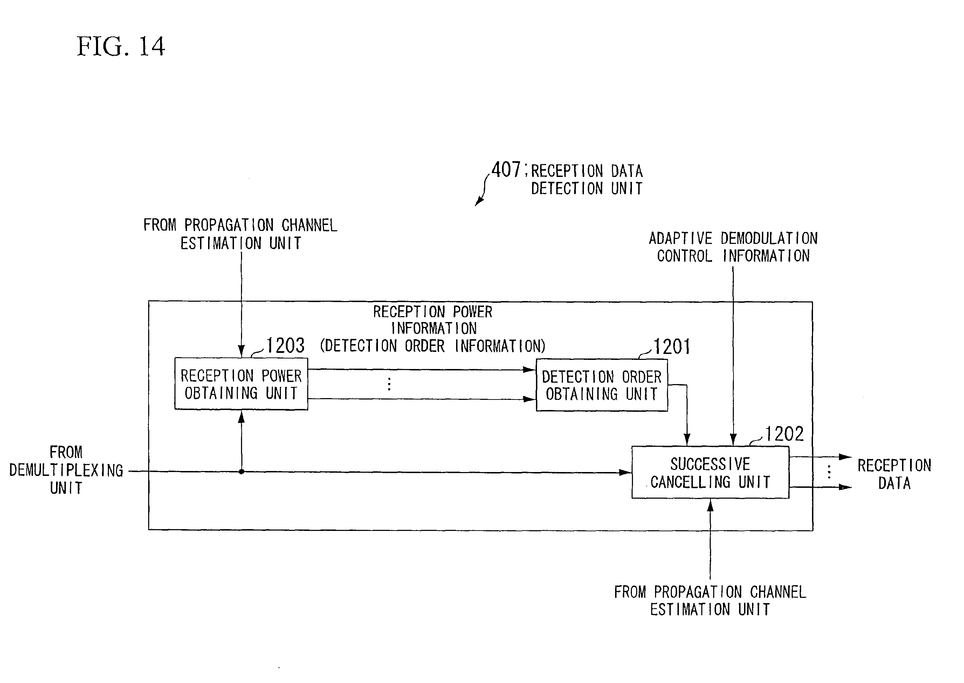

FIG. 14 is a schematic block diagram illustrating a configuration of the reception data detection unit 407 of the wireless reception apparatus according to the third embodiment of the present invention. The reception data detection unit 407 includes a detection order obtaining unit 1201, a successive cancelling unit 1202, and a reception power obtaining unit 1203.

The wireless reception apparatus receives a multiplexed signal that has been adaptively modulated by each wireless transmission apparatus. The reception power obtaining unit 1203 produces reception power information (information indicating reception power (the transmission power offset value) in a channel corresponding to each spreading code) based on a propagation channel estimation value that is an output of the propagation channel estimation unit 408 and a signal separated by the demultiplexing unit 406, and outputs the reception power information to the detection order obtaining unit 1201.

The detection order obtaining unit 1201 stores transmission power offset value-detection order correspondence information (see FIG. 13), and acquires the received code-channel detection order from the transmission power offset value-detection order correspondence information and the reception power information. In order to acquire the detection order, the method as in the example using FIG. 13 as described above can be used. However, the detection order acquired from the adaptive demodulation control information and the transmission power offset value-detection order correspondence information may not be determined uniquely.

For example, when the transmission power offset value is +2 in code channels of $C_1$ and $C_2$, the transmission power offset value is +1 in code channels of $C_3$ and $C_4$, and the transmission power offset value is 0 in other code channels, the reception apparatus may detect code channels in an order of $C_1 \rightarrow C_2 \rightarrow C_3 \rightarrow C_4 \rightarrow ...$ or may detect code channels in an order of $C_2 \rightarrow C_1 \rightarrow C_4 \rightarrow C_3 \rightarrow ...$ .

After acquiring the detection order, the detection order obtaining unit 1201 outputs a signal detection order notification signal indicating the detection order. The successive cancelling unit 1202 receives a received signal including a plurality of multiplexed pieces of data, the signal detection order notification signal that is an output of the detection order obtaining unit 1201, the adaptive demodulation control information that is an output of the adaptive demodulation control unit 409, and the propagation channel estimation value that is an output of the propagation channel estimation unit 408, and detects the data transmitted from the wireless transmission apparatus. Also, since the successive cancelling unit 1202 can be realized in the same configuration as the successive cancelling unit 502, a description thereof will be omitted.

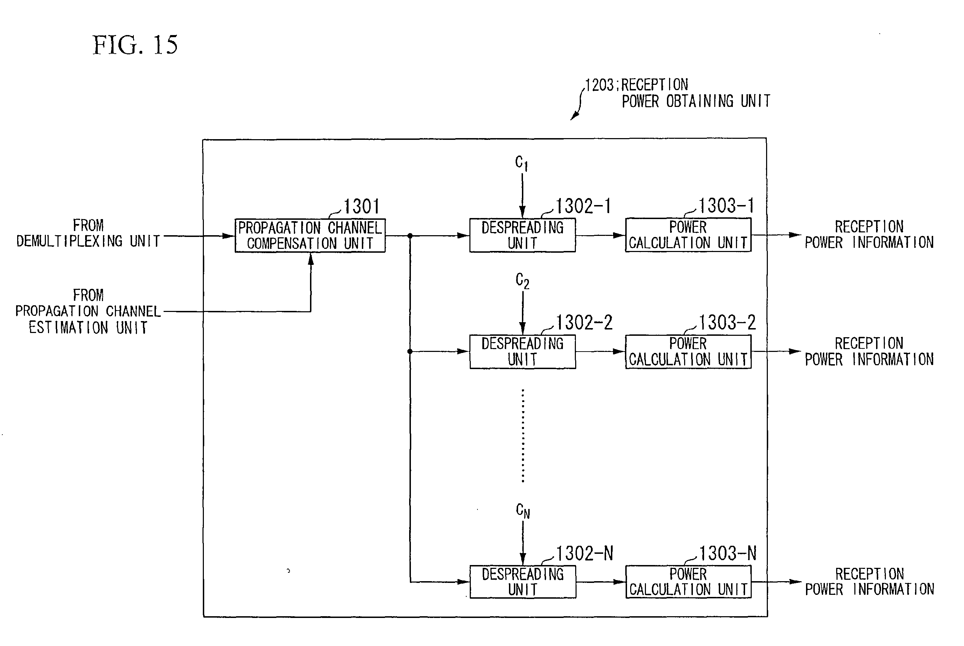

FIG. 15 is a schematic block diagram illustrating a configuration of the reception power obtaining unit 1203 (FIG. 14) according to the third embodiment of the present invention. The reception power obtaining unit 1203 includes a propagation channel compensation unit 1301, despreading units 1302-1 to 1302-N, and power calculation units 1303-1 to 1303-N.

The propagation channel compensation unit 1301 performs propagation channel compensation on a received signal that is an output of the demultiplexing unit 406 based on the propagation channel estimation value that is an output of the propagation channel estimation unit 408, and outputs the compensated received signal to the despreading units 1302-1 to 1302-N.

The despreading units 1302-1 to 1302-N perform despreading on the compensated received signal output from the propagation channel compensation unit 1301 using the spreading codes $C_1$ to $C_N$. The power calculation units 1303-1 to 1303-N calculate reception powers in the respective code channels corresponding to spreading codes $C_1$ to $C_N$ (for example, obtain two-squared amplitude or calculate a log of the amplitude and multiply the resultant value by a predetermined coefficient) based on the amplitude of the signal despread by the despreading units 1302-1 to 1302-N, and output reception power information that is information indicating the calculated reception power.

The propagation channel compensation unit 1301 and the despreading units 1302-1 to 1302-N can be realized in the same configuration as the propagation channel compensation unit 601 and the despreading units 606-1 to 606-N in FIG. 6.

Although in the present embodiment, the adaptive modulation control unit 107 determines the transmission power and the modulating unit 116 changes the transmission power, the method of changing the transmission power is not limited thereto. For example, a method of changing the amplitude of a predetermined sub-carrier after multiplexing is performed by the multiplexing unit 414 or a configuration for changing the amplitude at another time may be used.

As described above, the detection order is received in association with the channel transmission power from the wireless transmission apparatus to the wireless reception apparatus, and data detection and cancellation are sequentially performed in the order received from the wireless transmission apparatus, thereby improving reception quality for users. Thus, a throughput can be improved.

(Fourth embodiment)

In the second embodiment, the case where the information associating the MCS information with the detection order is shared between the wireless transmission apparatus and the wireless reception apparatus in advance such that the detection order information can be received in association with the MCS information without using a new communication resource has been described. Also, in the third embodiment, the case where the information associating the transmission power and the detection order is shared between the wireless transmission apparatus and the wireless reception apparatus in advance such that the detection order information can be received in association with the transmission power without using a new communication resource has been described.

In the fourth embodiment, the information associating the combination between the transmission power and the MCS information and the detection order is shared between the wireless transmission apparatus and the wireless reception apparatus in advance, such that the detection order information can be received in association with the combination between the transmission power and the MCS information without using a new communication resource.

Since the wireless transmission apparatus and the wireless reception apparatus (FIG. 4) according to the fourth embodiment have substantially the same configuration as the wireless transmission apparatus (FIG. 1) and the wireless reception apparatus (FIG. 4) according to the first embodiment, a description thereof will be omitted. However, an adaptive modulation control unit 107, a notification information generation unit 108 and a modulating unit 116 in the wireless transmission apparatus (FIG. 1) and an adaptive demodulation control unit 409 and a reception data detection unit 407 in the wireless reception apparatus (FIG. 4) differ from those in the first embodiment.

The adaptive modulation control unit 107 produces, for example, information for performing adaptive modulation (adaptive modulation control information) such as the modulation scheme or the coding rate and information for performing transmission power control (transmission power control information and amplitude control information) based on the report information indicated by the report information symbol sequence. In this case, in a plurality of multiplex code channels, at least two types of combinations between the transmission power and the MCS are set. The produced adaptive modulation control information is output to the encoding unit 115, the modulating unit 116, and the notification information generation unit 108, and the transmission power control information is output to the modulating unit 116.

The notification information generation unit 108 generates a control signal for transmitting the wireless reception apparatus of the adaptive modulation control information output from the adaptive modulation control unit 107, and outputs the control signal to the multiplexing unit 102.

The modulating unit 116 maps a signal output from the encoding unit 115 to a modulation symbol such as QPSK or 16QAM, and changes and outputs an amplitude of the modulation symbol based on the transmission power control information sent from the adaptive modulation control unit 107. In this case, when the transmission power control information indicates that transmission power in a certain code channel is to be increased, the modulating unit 116 increases the amplitude of the modulation symbol, and when the transmission power control information indicates that the transmission power is to be decreased, the modulating unit 116 decreases the amplitude of the modulation symbol. The adaptive demodulation control unit 409 produces adaptive demodulation control information (information indicating the modulation scheme and the coding rate in a channel corresponding to each spreading code) based on the control signal, and outputs the adaptive demodulation control information to the reception data detection unit 407.

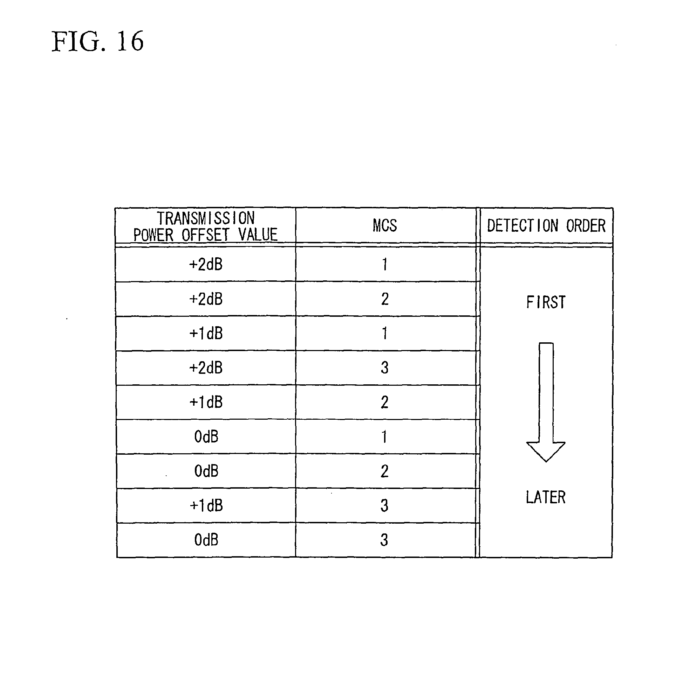

FIG. 16 is a table which is used in the fourth embodiment of the present invention. The transmission power offset value, the MCS, and the detection order are recorded to correspond to one another in the table of FIG. 16. The table shown in FIG. 16 is shared between the wireless transmission apparatus and the wireless reception apparatus in advance. For example, channels corresponding to three spreading codes of $C_1$, $C_2$, $C_3$ and $C_4$ are used, transmission power levels (reception power measurement values and transmission power offset values) corresponding to transmission data allocated to the respective channels are +2, +1,0, and +1, and the MCS levels are 1,2, 1, and 3. In this case, only if the transmission apparatus transmits the reception apparatus of the transmission power offset values and the MCS levels corresponding to $C_1$, $C_2$, $C_3$, and $C_4$ (or, the transmission apparatus simply transmits the wireless reception apparatus of only the MCS levels, and the wireless reception apparatus measures the reception power), can the wireless reception apparatus detect code channels in an order of $C_1 \rightarrow C_2 \rightarrow C_3 \rightarrow C_4$ from a combination between the table shown in FIG. 16 and the transmission power offset values and the MCS levels corresponding to $C_1$, $C_2$, $C_3$, and $C_4$.

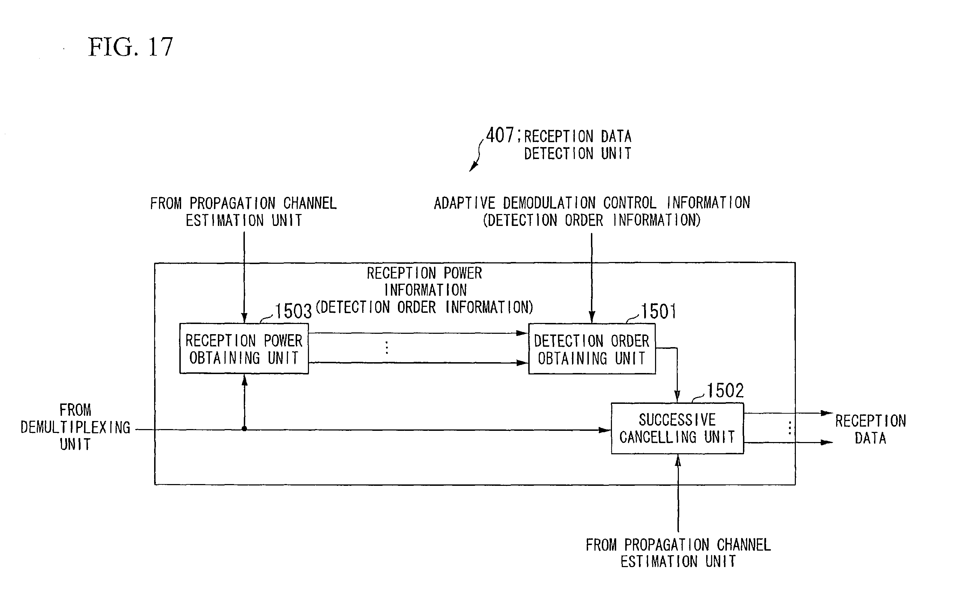

FIG. 17 is a schematic block diagram illustrating a configuration of the reception data detection unit 407 of the wireless reception apparatus according to the fourth embodiment of the present invention. The reception data detection unit 407 includes a detection order obtaining unit 1501, a successive cancelling unit 1502, and a reception power obtaining unit 1503.

The wireless reception apparatus receives a multiplexed signal that has been adaptively modulated by each wireless transmission apparatus.

The reception power obtaining unit 1503 produces reception power information (information indicating reception power (transmission power offset value) in a channel corresponding to each spreading code) based on the propagation channel estimation value that is an output of the propagation channel estimation unit 408 and the signal separated by the demultiplexing unit 406, and outputs the reception power information to the detection order obtaining unit 1501.

The detection order obtaining unit 1501 stores transmission power offset value-MCS-detection order correspondence information, and acquires the received code-channel detection order from the transmission power offset value-MCS-detection order correspondence information, the reception power information, and the adaptive demodulation control information that is an output of the adaptive demodulation control unit. The method as in the example using FIG. 16 can be used to acquire the code-channel detection order.

However, the detection order acquired from the adaptive demodulation control information and the transmission power offset value-MCS-detection order correspondence information may not be determined uniquely. For example, when the transmission power offset values are +2 and the MCS levels are 1 in the code channels of C1 and C2, the transmission power offset values are +1 and the MCS levels are 2 in the code channels of C3 and C4, and the transmission power offset values are 0 and the MCS levels are 3 in other code channels, the reception apparatus may detect code channels in an order of C1→C2→C3→C4→... or may detect code channels in an order of C2→C1→C4→C3→... .

After acquiring the detection order, the detection order obtaining unit 1501 outputs a signal detection order notification signal indicating the detection order. The successive cancelling unit 1502 receives the received signal including a plurality of multiplexed pieces of data, the signal detection order notification signal that is an output of the detection order obtaining unit 1501, the adaptive demodulation control information that is an output of the adaptive demodulation control 409, and the propagation channel estimation value that is an output of the propagation channel estimation unit 408, and detects data transmitted from the wireless transmission apparatus. Since the reception power obtaining unit 1502 and the successive cancelling unit 1502 can be realized in the same configurations as the reception power obtaining unit 1202 and the successive cancelling unit 502, a description thereof will be omitted.

As described above, the detection order is received in association with the transmission power and the MCS level of the channel from the wireless transmission apparatus to the wireless reception apparatus, which sequentially performs data detection and cancellation in the order received from the wireless transmission apparatus, thereby improving reception quality for users. Thus, a throughput can be improved.

Although in the second to fourth embodiments, the MCS (the modulation scheme or the coding rate) and the transmission power provided to the transmission data are used as the transmission parameters and a plurality of types of transmission parameters are applied to a plurality of different channels in the wireless transmission apparatus to transmit the channel detection order, and the wireless reception apparatus performs the signal detection in the received detection order, the present invention is not limited thereto. For example, a spreading factor, a transmission antenna weight, a used spreading code, and other transmission parameters affecting reliability of the decoding result may be used.

Although the respective embodiments of the present invention have been described in connection with code multiplexing, the present invention may be applied to signal detection in a user multiplexing scheme, such as multiple input multiple output (MIMO) or interleaved division multiple access (IDMA). Although the respective embodiments have also been described in connection with multi-carrier transmission, the present invention may be equally applied to single carrier transmission, such as code division multiple access (CDMA) performing code multiplexing.

Although the respective embodiments have been described as being applied to the wireless communication system including the wireless transmission apparatus and the wireless reception apparatus, the present invention is not limited thereto and may be applied to communication systems other than the wireless communication system. For example, the present invention may be applied to wired communication systems, such as power line communication (PLC).

Further, in the embodiments described above, a program for realizing a function of each part of the wireless transmission apparatus 100a in FIG. 1 or the wireless reception apparatus 200a in FIG. 4 may be recorded on a computer-recordable recording medium, read from the recording medium, and executed by a computer system to control the wireless transmission apparatus or the wireless reception apparatus. The above-described "computer system" includes an OS and hardware such as peripheral devices.

Also, the "computer-recordable recording medium" is a storage that may be a portable storage medium such as a flexible disk, a magneto-optical disk, a ROM, a CD-ROM, or a hard disk in a computer system. Furthermore, the "computer-recordable recording medium" includes a medium for temporarily dynamically storing a program, such as a communication line when the program is transmitted via a network such as the Internet or a communication line such as a telephone line, or a medium for storing a program during a predetermined time, such as a volatile memory in a computer system including a server and a client. Also, the program may be a program for realizing a portion of the above-described function, or a program capable of realizing the above-described function through a combination with a program that has been recorded in a computer system.

Although the embodiments of the present invention have been described in detail with reference to the accompanying drawings, a detailed configuration is not limited to the embodiments, and designs within the spirit and scope of the present invention are included in the claims.

Industrial applicability

The present invention can be applied to a transmission apparatus, a reception apparatus, a communication system and a transmission method in which the reception apparatus receiving a signal including a plurality of multiplexed channels from the transmission apparatus can detect respective code channels in a proper order, thereby reducing a processing amount in the reception apparatus.

**Claims**

1. A transmission apparatus which communicates with a reception apparatus, the transmission apparatus comprising:

   a transmission parameter control unit which sets a transmission parameter of at least one of the multiplex channels to be different from those of the other channels; and
   a transmission unit which transmits information indicating a signal detection order for the multiplex channels to the reception apparatus.

2. The transmission apparatus according to claim 1, further comprising a signal detection order determination unit which determines the signal detection order for the multiplex channels using the transmission parameters of the multiplex channels,
   wherein the transmission unit transmits the information indicating the signal detection order determined by the signal detection order determination unit to the reception apparatus.

3. The transmission apparatus according to claim 1, further comprising a signal detection order determination unit which determines the signal detection order for the multiplex channels,
   wherein the transmission parameter control unit sets a transmission parameter of at least one of the multiplex channels to be different from those of the other channels using the signal detection order, and
   the transmission unit transmits the information indicating the signal detection order to the reception apparatus.

4. The transmission apparatus according to claim 1, wherein the transmission unit transmits a data signal generated using the transmission parameters and detection order information indicating the signal detection order to the reception apparatus.

5. The transmission apparatus according to claim 1, wherein the information indicating the signal detection order is transmission parameter control information indicating the transmission parameters set in association with the signal detection order, and
   the transmission unit transmits a data signal generated using the transmission parameters and the transmission parameter control information to the reception apparatus.

6. The transmission apparatus according to claim 1, wherein the information indicating the signal detection order is a data signal generated using the transmission parameters set in association with the signal detection order, and
   the transmission unit transmits the data signal to the reception apparatus.

7. The transmission apparatus according to claim 1, wherein the transmission parameter control unit sets transmission power of at least one of the multiplex channels to be different from those of the other channels, and
   the transmission unit transmits the signal detection order using a difference in transmission power among the channels.

8. The transmission apparatus according to claim 7, further comprising a signal detection order determination unit which determines a higher signal detection priority for a channel for which high transmission power is set, for the signal detection order.

9. The transmission apparatus according to claim 1, wherein the transmission parameter control unit sets a modulation scheme and a coding rate of at least one of the multiplex channels to be different from those of the other channels, and
   the transmission unit transmits the signal detection order using a difference in modulation scheme and coding rate among the channels.

10. The transmission apparatus according to claim 9, further comprising a signal detection order determination unit which determines a high signal detection priority for a channel for which a modulation scheme and a coding rate of a low transfer rate are set, for the signal detection order.

11. The transmission apparatus according to claim 1, wherein the transmission parameter control unit sets a modulation scheme, a coding rate and transmission power of at least one of the multiplex channels to be different from those of the other channels, and
   the transmission unit transmits the signal detection order using a difference in modulation scheme, coding rate and transmission power among the channels.

**12.** The transmission apparatus according to claim 1, further comprising a multiplexing unit which code-multiplexes the multiplex channels.

**13.** The transmission apparatus according to claim 1, further comprising a multiplexing unit which spatially multiplexes the multiplex channels.

**14.** A reception apparatus which communicates with a transmission apparatus, the reception apparatus comprising:

a detection order obtaining unit which acquires a signal detection order from the transmission apparatus; and
a signal detection unit which detects signals from a plurality of channels based on the detection order acquired by the detection order obtaining unit.

**15.** The reception apparatus according to claim 14, wherein the plurality of channels are code-multiplexed, and further comprising a separation unit which separates signals allocated to the plurality of channels.

**16.** The reception apparatus according to claim 14, wherein the plurality of channels are spatially multiplexed, and further comprising a separation unit which separates signals allocated to the plurality of channels.

**17.** A communication system comprising a transmission apparatus and a reception apparatus, the transmission apparatus comprising:

a transmission parameter control unit which sets a transmission parameter of at least one of the multiplex channels to be different from those of the other channels; and
a transmission unit which transmits information indicating a signal detection order for the multiplex channels to the reception apparatus, and
the reception apparatus comprising:

a detection order obtaining unit which acquires the signal detection order from the transmission apparatus; and
a signal detection unit which detects signals from a plurality of channels based on the detection order acquired by the detection order obtaining unit.

**18.** The communication system according to claim 17, wherein the transmission apparatus comprises a transmission parameter control unit which sets a transmission parameter of at least one of the multiplex channels to be different from those of the other channels,
the transmission unit of the transmission apparatus transmits a data signal generated using the transmission parameters and the detection order information indicating the signal detection order for the multiplex channels to the reception apparatus,
the detection order obtaining unit of the reception apparatus acquires the signal detection order from the detection order information, and
the signal detection unit of the reception apparatus detects the signals from the plurality of channels based on the detection order acquired by the detection order obtaining unit.

**19.** The communication system according to claim 17, wherein the transmission unit of the transmission apparatus transmits a data signal generated using the transmission parameter, and transmission parameter control information indicating the transmission parameters set in association with the signal detection order as the information indicating the signal detection order for the multiplex channels to the reception apparatus, and
the detection order obtaining unit of the reception apparatus acquires the signal detection order associated with the transmission parameters from the transmission parameter control information.

**20.** The communication system according to claim 17, wherein the transmission unit of the transmission apparatus transmits a data signal generated using the transmission parameters set in association with the signal detection order as the information indicating the signal detection order for the multiplex channels to the reception apparatus, and
the detection order obtaining unit of the reception apparatus estimates the transmission parameters applied to the data signals and acquires the signal detection order from the estimated transmission parameters.

**21.** A transmission method using a transmission apparatus which communicates with a reception apparatus, wherein the transmission apparatus executes:

a transmission parameter controlling process of setting a transmission parameter of at least one of the multiplex channels to be different from those of the other channels; and
a transmitting process of transmitting information indicating a signal detection order for the multiplex channels to the reception apparatus.

FIG. 1

100a : WIRELESS TRANSMISSION APPARATUS

118

101-u

| 115 | 116 | 117 |
|---|---|---|
| ENCODING UNIT | MODULATING UNIT | SPREADING UNIT |

TRANSMISSION DATA

102 MULTIPLEXING UNIT

103 IFFT UNIT

104 GI INSERTION UNIT

105 D/A CONVERSION UNIT

106 WIRELESS TRANSMISSION UNIT

107 ADAPTIVE MODULATION CONTROL UNIT

108 NOTIFICATION INFORMATION GENERATION UNIT

109 PILOT GENERATION UNIT

114 DECODING UNIT

113 DEMODULATION UNIT

112 DEMULTIPLEXING UNIT

111 A/D CONVERSION UNIT

110 WIRELESS RECEPTION UNIT

RECEPTION DATA

EP 2 192 710 A1

FIG. 2

| MCS | MODULATION SCHEME | CODING RATE |
|:---:|:---:|:---:|
| 1 | QPSK | 1/3 |
| 2 | QPSK | 1/2 |
| 3 | 16QAM | 1/3 |
| 4 | QPSK | 3/4 |
| 5 | 16QAM | 1/2 |
| 6 | 16QAM | 3/4 |
| 7 | 64QAM | 3/4 |

FIG. 3

| CODE NUMBER CORRESPONDING TO CODE CHANNELS | DETECTION ORDER |
|:---:|:---:|
| $C_1$ | 1 |
| $C_2$ | 2 |
| $C_3$ | 3 |
| $C_4$ | 4 |
| $C_5$ | 5 |
| ⋮ | ⋮ |
| $C_N$ | N |

FIG. 4

200a ; WIRELESS RECEPTION APPARATUS

401

| 402 | 403 | 404 | 405 | 406 | 407 |
|---|---|---|---|---|---|
| WIRELESS RECEPTION UNIT | A/D CONVERSION UNIT | GI REMOVING UNIT | FFT UNIT | DEMULTIPLEXING UNIT | RECEPTION DATA DETECTION UNIT |

RECEPTION DATA

408 PROPAGATION CHANNEL ESTIMATION UNIT

409 ADAPTIVE DEMODULATION CONTROL UNIT

410 MCS DETERMINATION UNIT

411 REPORT INFORMATION GENERATION UNIT

| 416 | 415 | 414 | 413 | 412 |
|---|---|---|---|---|
| WIRELESS TRANSMISSION UNIT | D/A CONVERSION UNIT | MULTIPLEXING UNIT | MODULATING UNIT | ENCODING UNIT |

TRANSMISSION DATA

EP 2 192 710 A1

# FIG. 5

407; RECEPTION DATA DETECTION UNIT

ADAPTIVE DEMODULATION CONTROL INFORMATION

DETECTION
ORDER INFORMATION
→
501
DETECTION ORDER
OBTAINING UNIT

502
SUCCESSIVE
CANCELLING
UNIT
→ RECEPTION
DATA

FROM
DEMULTIPLEXING UNIT

FROM
PROPAGATION CHANNEL
ESTIMATION UNIT

## FIG. 6

FROM
DEMULTIPLEXING UNIT

FROM
PROPAGATION CHANNEL
ESTIMATION UNIT

604-1
MCI REPLICA
GENERATION
UNIT

605-2

604-2    604-(N-1)
MCI REPLICA
GENERATION
UNIT

MCI REPLICA
GENERATION
UNIT

605-N

601-1
PROPAGATION CHANNEL
COMPENSATION UNIT

601-2
PROPAGATION CHANNEL
COMPENSATION UNIT

603-2 FROM
PROPAGATION
PATH
ESTIMATION
UNIT

601-N
PROPAGATION CHANNEL
COMPENSATION UNIT

603-1
CODE CHANNEL
REPLICA
GENERATION
UNIT

CODE CHANNEL
REPLICA
GENERATION
UNIT

602-1

602-2

602-N

606-1
$C_2$    DESPREADING
UNIT

606-2
DESPREADING
UNIT  $C_2$

606-N
$C_N$  DESPREADING
UNIT

607-1
MODULATION
SCHEME    DEMODULATION
UNIT

MODULATION
SCHEME

MODULATION
SCHEME

607-2
MODULATION
SCHEME  DEMODULATION
UNIT

MODULATION
SCHEME

607-N
MODULATION
SCHEME  DEMODULATION
UNIT

608-1
CODING
RATE   DECODING UNIT

608-2
CODING
RATE   DECODING UNIT

608-N
CODING
RATE   DECODING UNIT

CODING BIT LLR

CODING BIT LLR

INFORMATION BIT

INFORMATION BIT

INFORMATION BIT

502; SUCCESSIVE CANCELLING UNIT

## FIG. 7

603-m; CODE CHANNEL REPLICA GENERATION UNIT

MODULATION SCHEME

CODING BIT LLR → SYMBOL REPLICA GENERATION UNIT 701 → SPREADING UNIT 703 →

## FIG. 8

START

DETERMINE DETECTION ORDER — S801

CANCEL INTERFERENCE — S802 ← GENERATE INTERFERENCE REPLICA FOR DETECTED USER — S805

DETECT USER DATA — S803

HAVE ALL USER DATA BEEN DETECTED — S804 — NO

YES

END

FIG. 9

100b : WIRELESS TRANSMISSION APPARATUS

FIG. 10

200b;WIRELESS RECEPTION APPARATUS

EP 2 192 710 A1

FIG. 11

| MCS | MODULATION SCHEME | CODING RATE | CODE NUMBER | DETECTION ORDER |
|---|---|---|---|---|
| 1 | QPSK | 1/3 | $C_1$ | FIRST |
| 2 | QPSK | 1/2 | $C_2$ | |
| 3 | 16QAM | 1/3 | $C_3$ | |
| 4 | QPSK | 3/4 | $C_4$ | |
| 5 | 16QAM | 1/2 | $C_5$ | |
| 6 | 16QAM | 3/4 | $C_6$ | |
| 7 | 64QAM | 3/4 | $C_7$ | LATER |

FIG. 12

407; RECEPTION DATA DETECTION UNIT

1001
DETECTION ORDER OBTAINING UNIT

ADAPTIVE DEMODULATION CONTROL INFORMATION (DETECTION ORDER INFORMATION)

1002
SUCCESSIVE CANCELLING UNIT

FROM DEMULTIPLEXING UNIT

RECEPTION DATA

FROM PROPAGATION CHANNEL ESTIMATION UNIT

FIG. 13

| TRANSMISSION POWER OFFSET VALUE | DETECTION ORDER |
|---|---|
| +2 dB | FIRST |
| +1 dB | ↓ |
| 0 dB | LATER |

FIG. 14

407 : RECEPTION DATA
DETECTION UNIT

FROM PROPAGATION CHANNEL
ESTIMATION UNIT

ADAPTIVE DEMODULATION
CONTROL INFORMATION

RECEPTION POWER
INFORMATION
(DETECTION ORDER INFORMATION)

1203

RECEPTION POWER
OBTAINING UNIT

1201

DETECTION ORDER
OBTAINING UNIT

1202

FROM
DEMULTIPLEXING
UNIT

SUCCESSIVE
CANCELLING UNIT

RECEPTION
DATA

FROM PROPAGATION CHANNEL
ESTIMATION UNIT

## FIG. 15

1203; RECEPTION POWER OBTAINING UNIT

FROM DEMULTIPLEXING UNIT → 1301 PROPAGATION CHANNEL COMPENSATION UNIT

FROM PROPAGATION CHANNEL ESTIMATION UNIT

$c_1$ → 1302-1 DESPREADING UNIT → 1303-1 POWER CALCULATION UNIT → RECEPTION POWER INFORMATION

$c_2$ → 1302-2 DESPREADING UNIT → 1303-2 POWER CALCULATION UNIT → RECEPTION POWER INFORMATION

$c_N$ → 1302-N DESPREADING UNIT → 1303-N POWER CALCULATION UNIT → RECEPTION POWER INFORMATION

EP 2 192 710 A1

FIG. 16

| TRANSMISSION POWER OFFSET VALUE | MCS | DETECTION ORDER |
|---|---|---|
| +2dB | 1 | FIRST |
| +2dB | 2 | |
| +1dB | 1 | |
| +2dB | 3 | |
| +1dB | 2 | |
| 0dB | 1 | |
| 0dB | 2 | |
| +1dB | 3 | LATER |
| 0dB | 3 | |

# FIG. 17

407: RECEPTION DATA
DETECTION UNIT

FROM PROPAGATION CHANNEL
ESTIMATION UNIT

ADAPTIVE DEMODULATION CONTROL INFORMATION
(DETECTION ORDER INFORMATION)

RECEPTION POWER
INFORMATION
(DETECTION ORDER INFORMATION)

1503

RECEPTION POWER
OBTAINING UNIT

1501

DETECTION ORDER
OBTAINING UNIT

1502

FROM
DEMULTIPLEXING
UNIT

SUCCESSIVE
CANCELLING UNIT

RECEPTION
DATA

FROM PROPAGATION CHANNEL
ESTIMATION UNIT

FIG. 18

FIG. 19

| CH1 $C_{8,1}$ | 1 | 1 | 1 | 1 | 0.25 | 0.25 | 0.25 | 0.25 |
|---|---|---|---|---|---|---|---|---|
| CH2 $C_{8,2}$ | 1 | 1 | 1 | 1 | -0.25 | -0.25 | -0.25 | -0.25 |

$\times$ $C_{8,1}$

| 1 | 1 | 1 | 1 | 1 | 1 | 1 | 1 |
|---|---|---|---|---|---|---|---|

$\Rightarrow$

| 5 |
|---|
| 3 |

| **INTERNATIONAL SEARCH REPORT** | International application No. |
|---|---|
| | PCT/JP2008/066991 |

A. CLASSIFICATION OF SUBJECT MATTER
*H04J11/00(2006.01)i, H04J13/04(2006.01)i, H04J13/06(2006.01)i*

According to International Patent Classification (IPC) or to both national classification and IPC

B. FIELDS SEARCHED

Minimum documentation searched (classification system followed by classification symbols)
H04J11/00, H04J13/04, H04J13/06

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2005/078955 A1  (NEC Corp.), 25 August, 2005 (25.08.05), Par. Nos. [0199] to [0203], [0226] to [0228] | 1,2,4-6,9, 10,13,14, 16-21 |
| Y | & EP 1717968 A1          & US 2007/0155433 A1 | 11 |
| A | & KR 2007011304 A         & CN 1965501 A | 3 |
| X | JP 2003-179573 A  (Matsushita Electric Industrial Co., Ltd.), | 1,2,4-8,12, 14,15,17-21 |
| Y | 27 June, 2003 (27.06.03), | 11 |
| A | Par. Nos. [0359] to [0362], [0380]; Fig. 52 & WO 2003/017547 A1      & EP 1416657 A1 & KR 2004017858 A         & AU 2002318614 A1 & US 2004/0174812 A1      & CN 1568592 A & JP 4119696 B2 | 3 |

| ☒ Further documents are listed in the continuation of Box C. | ☐ See patent family annex. |
|---|---|

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 December, 2008 (16.12.08) | 06 January, 2009 (06.01.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/066991 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2006-222872 A  (Nippon Telegraph And Telephone Corp.), 24 August, 2006 (24.08.06), Full text; all drawings (Family: none) | 1-21 |

Form PCT/ISA/210 (continuation of second sheet) (April 2007)

## REFERENCES CITED IN THE DESCRIPTION

**Patent documents cited in the description**

- JP 2007245649 A

**Non-patent literature cited in the description**

- **Maeda ; Arata ; Abeta ; Sawahashi.** VSF-OFCDM Using 2D Spreading and Property Thereof. *The Institute of Electronics, Information and Communication Engineers, technical report RCS 2002-61,* May 2002
- **Ishihara ; Takeda ; Adachi.** DS-CDMA Frequency Domain MAI Canceller. *The Institute of Electronics, Information and Communication Engineers, technical report RCS 2004-316,* January 2005
- **Akita ; Suyama ; Fukawa ; Suzuki.** Interference Canceller in Downlink Using Transmission Power Control of MC-CDMA. *The Institute of Electronics, Information and Communication Engineers, technical report RCS 2002-35,* April 2002